# EUROPEAN PATENT APPLICATION

(11) **EP 4 707 728 A1**
(43) Date of publication of application: **11.03.2026**
(21) Application number: 24217535.4
(22) Date of filing: 04.12.2024
(51) Int. Cl.: G01B 11/275

(54) **FOUR-WHEEL ALIGNER**

(30) Priority: 09.09.2024 CN 202411258983
(71) Applicant: Shenzhen Smartsafe Tech Co., Ltd., Shenzhen, Guangdong 518000 (CN)
(72) Inventor: ZHAN, Wei, Shenzhen 51800 (CN); WANG, Qingwei, Shenzhen 51800 (CN); GU, Shaoli, Shenzhen 51800 (CN)
(74) Representative: Cabinet Netter

(57) **Abstract**

The present application relates to the field of vehicle detection technology, more particularly to a four-wheel aligner (1000), which includes a first detection device (101), a second detection device (102) and a control device (130); the first detection device (101) includes a first position detection module (1401) and a first image acquisition module (1201), the second detection device (102) includes a second position detection module (1402) and a second image acquisition module (1202), the first image acquisition module (1201) and the second image acquisition module (1202) are respectively configured to acquire image information on four wheels, in the first position detection module (1401) and the second position detection module (1402), one includes a fifth calibration member (141), and another one includes an image acquisition member (142), the image acquisition member (142) is configured to capture image information of the fifth calibration member (141); the control device (130) analyzes the four-wheel alignment information of the vehicle according to the acquired image information, and this method of using image information for analysis to obtain alignment information reduces the detection time of the four-wheel aligner (1000), improves the detection efficiency of the four-wheel aligner (1000), and improves the convenience of using the four-wheel aligner (1000).

## Description

### TECHNICAL FIELD

The present application relates to the field of vehicle detection technology, more particularly to a four-wheel aligner.

### BACKGROUND

The significance of four-wheel alignment detection is to ensure that the relative positions between the tires, steering mechanism and front and rear axles of the vehicle are maintained in a correct balance state, so as to improve the driving safety, reduce the fuel consumption, extend the tire life, and improve the driving comfort.

In order to detect the four-wheel alignment parameters of a vehicle, it is usually necessary to use an intelligent four-wheel aligner to perform four-wheel alignment detection on the vehicle, so as to adjust the four-wheel parameters of the vehicle and ensure that the vehicle has good driving performance and driving stability; but some four-wheel aligners have long detection time and low detection efficiency.

The above statements are only configured to provide background technical information related to the present application, and do not necessarily constitute prior art.

### SUMMARY

An objective of the present application to provide a four-wheel aligner, which aims to solve the technical problems of long detection time and low detection efficiency of four-wheel aligners in related technologies.

In order to achieve the above-mentioned objective, the technical solution adopted in the present application is that a four-wheel aligner is provided, which includes: a first detection device, a second detection device and a control device; the first detection device is configured to be arranged on a left side of a vehicle, in which the first detection device includes a first position detection module and a first image acquisition module, the first image acquisition module is configured to acquire first image information of a first calibration member mounted on a left front wheel of the vehicle and second image information of a second calibration member mounted on a left rear wheel of the vehicle; the second detection device is configured to be arranged on a right side of the vehicle, in which the second detection device includes a second position detection module and a second image acquisition module, the second image acquisition module is configured to acquire third image information of a third calibration member mounted on a right front wheel of the vehicle and fourth image information of a fourth calibration member mounted on a right rear wheel of the vehicle; one of the first position detection module and the second position detection module includes a fifth calibration member, and another one of the first position detection module and the second position detection module includes an image acquisition member, and the image acquisition member is configured to capture fifth image information of the fifth calibration member; and the control device is connected to the first image acquisition module, the second image acquisition module, and the image acquisition member; and configured to receive the first image information, the second image information, the third image information, the fourth image information, and the fifth image information, and to analyze four-wheel alignment information of the vehicle according to the first image information, the second image information, the third image information, the fourth image information, and the fifth image information.

Optionally, both the first position detection module and the second position detection module include the image acquisition member and the fifth calibration member; the image acquisition member of the first position detection module is configured to capture sixth image information of the fifth calibration member of the second position detection module; the image acquisition member of the second position detection module is configured to capture seventh image information of the fifth calibration member of the first position detection module; the fifth image information includes at least one of the sixth image information and the seventh image information; and the image acquisition member of the first position detection module and the image acquisition member of the second position detection module are both connected to the control device, to enable the control device receiving the sixth image information and the seventh image information, and analyze position information between the first detection device and the second detection device according to the sixth image information and the seventh image information.

Optionally, the fifth calibration member is a self-luminous calibration member.

Optionally, the fifth calibration member includes a light plate, a diffuser plate, and a target plate; the light plate, the diffuser plate, and the target plate are stacked, and the diffuser plate is located between the light plate and the target plate.

Optionally, a surface of the target plate facing away from the light plate is provided with a plurality of calibration areas, and a spacing between at least two of the plurality of calibration areas and the light plate is different.

Optionally, in the first position detection module or the second position detection module, a plurality of fifth calibration members are provided, and at least two of the plurality of fifth calibration members have different distances from the vehicle along a width direction of the vehicle; projections of the two fifth calibration members with different distances from the vehicle along the width direction of the vehicle at least partially do not overlap.

Optionally, four fifth calibration members are provided, a first of the four fifth calibration members and a third of the four fifth calibration members are arranged at intervals along a length direction of the vehicle; a second of the four fifth calibration members is located at a lower side of the first of the four fifth calibration members and at a side of the first of the four fifth calibration members close to the vehicle, and a fourth of the four fifth calibration members is located at an upper side of the first of the four fifth calibration members and at a side of the first of the four fifth calibration members away from the vehicle.

Optionally, the image acquisition member is located in a middle of the plurality of fifth calibration members.

Optionally, the first detection device further includes a mounting base, and the first image acquisition module includes two image acquisition units mounted on the mounting base, one of the two image acquisition units is arranged on a side of the mounting base facing the first calibration member to acquire the first image information; another of the two image acquisition units is located on a side of the mounting base facing the second calibration member to acquire the second image information.

Optionally, a lens of each of the two image acquisition units is tilted upward toward the vehicle.

Optionally, an angle between an optical axis of the lens of each of the two image acquisition units and a horizontal plane is ranged from 12.5° to 18.5°; and/or, the angle between the optical axis of the lens of each of the two image acquisition units and an auxiliary plane is ranged from 14° to 20°, and the auxiliary plane is perpendicular to the width direction of the vehicle.

Optionally, each of the two image acquisition units includes a camera and a fill light, and the fill light is arranged outside a lens of the camera.

Optionally, each of the two image acquisition units further includes a first bracket and a second bracket that are mounted on the mounting base and arranged at intervals, the camera is mounted on the first bracket, and the fill light plate is mounted on the second bracket.

Optionally, the mounting base is provided with a mounting surface, and the first position detection module and the two image acquisition units are mounted on the mounting surface.

Optionally, the mounting base includes a base, a support frame and a mounting plate, the support frame is connected between the base and the mounting plate to enable the base and the mounting plate being spaced apart, and a surface of the mounting plate facing away from the support frame forms the mounting surface.

Optionally, the mounting base is provided with a magnetic attraction surface, and the magnetic attraction surface enables to be magnetically fixed to a bearing mechanism for bearing the vehicle.

Optionally, a height difference between the lens of each of the two image acquisition units and the magnetic attraction surface is ranged from 100mm to 160mm;

and/or, along the width direction of the vehicle, a distance between the lens of each of the two image acquisition units and the magnetic attraction surface is ranged from 160mm to 220mm.

Optionally, the control device further includes a first control member and a second control member; the first control member is arranged in the first detection device, and the second control member is arranged in the second detection device;
the first control member is connected to the first detection device to receive the first image information, the second image information, and the sixth image information;
the second control member is connected to the second detection device to receive the third image information, the fourth image information, and the seventh image information;
the first control member and the second control member are connected in a wired manner or a wireless manner;
the first control member transmits the first image information, the second image information, and the sixth image information to the second control member, and the second control member receives the first image information, the second image information, and the sixth image information, the four-wheel alignment information of the vehicle is analyzed according to the first image information, the second image information, the third image information, the fourth image information, the sixth image information, and the seventh image information, and to display the four-wheel alignment information of the vehicle; or
the second control member transmits the third image information, the fourth image information, and the seventh image information to the first control member, the first control member receives the first image information, the second image information and the sixth image information, the four-wheel alignment information of the vehicle is analyzed according to the first image information, the second image information, the third image information, the fourth image information, the sixth image information, and the seventh image information, and to display the four-wheel alignment information of the vehicle.

Optionally, the control device further includes a third control member, a fourth control member, and a fifth control member; the third control member is arranged in the first detection device, the fourth control member is arranged in the second detection device; the fifth control member is a separated component;
the third control member is connected to the first detection device to receive the first image information, the second image information, and the sixth image information;
the fourth control member is connected to the second detection device to receive the third image information, the fourth image information, and the seventh image information;
the third control member is able to directly transmit the first image information, the second image information, and the sixth image information to the fifth control member in a wireless manner or in a wired manner or transmit the first image information, the second image information, and the sixth image information to the fifth control member to the fifth control member through the fourth control member, the fourth control member can directly transmit the third image information, the fourth image information, and the seventh image information to the fifth control member in a wireless manner or in a wired manner or transmit the third image information, the fourth image information, and the seventh image information to the fifth control member to the fifth control member through the third control member; the fifth control member is able to analyze the four-wheel alignment information of the vehicle according to the first image information, the second image information, the third image information, the fourth image information, the sixth image information, and the seventh image information, and to display the four-wheel alignment information of the vehicle; or
the third control member is able to directly transmit the first image information, the second image information, and the sixth image information to the fourth control member in a wireless manner or in a wired manner or transmit the first image information, the second image information, and the sixth image information to the fourth control member through the fifth control member; the fourth control member is able to analyze the four-wheel alignment information of the vehicle according to the first image information, the second image information, the third image information, the fourth image information, the sixth image information, and the seventh image information, and transmit the four-wheel alignment information of the vehicle to the fifth control member for display; or
the fourth control member is able to directly transmit the third image information, the fourth image information, and the seventh image information to the third control member in a wireless manner or in a wired manner or transmit the third image information, the fourth image information, and the seventh image information to the third control member through the fifth control member; the third control member is able to analyze the four-wheel alignment information of the vehicle according to the first image information, the second image information, the third image information, the fourth image information, the sixth image information, and the seventh image information, and transmit the four-wheel alignment information of the vehicle to the fifth control member for display.

The above one or more technical solutions in the four-wheel aligner provided by the present application have at least one of the following technical effects: during the detection process, the control device can analyze the position information between the first detection device and the second detection device and the position information of the four wheels according to the first image information, the second image information, the third image information, the fourth image information, and the fifth image information, and these position information are used to calculate and analyze to obtain the four-wheel alignment information of the vehicle; the position information between the first detection device and the second detection device and the position information of the four wheels can be configured to obtain the position information of the first detection device and the second detection device relative to the vehicle. This method of obtaining the position information by analyzing the image information can reduce the requirements for the accuracy of the mounting positions of the first detection device and the first detection device, the mounting time of the first detection device and the second detection device is saved, the detection time of the four-wheel aligner is reduced, the detection efficiency of the four-wheel aligner and the convenience of using the four-wheel aligner are improved.

The above description is only a summary of the technical solution of the present application. In order to more clearly understand the technical means of the present application, it can be implemented according to the content of the application, and in order to make the above and other purposes, features and advantages of the present application more obvious and easy to understand, the specific implementation method of the present application is specifically cited below.

### BRIEF DESCRIPTION OF THE DRAWINGS

In order to more clearly illustrate the technical solution in the embodiment of the present application, the following will briefly introduce the drawings required for use in the embodiment or the prior art description. Obviously, the drawings described below are only some embodiments of the present application. For ordinary technicians in this field, other drawings can also be obtained based on these drawings without creative work.
FIG. 1 is a structural schematic diagram of a four-wheel aligner provided by some embodiments of the present application when detecting a vehicle;
FIG. 2 is a structural schematic diagram of a first detection device / a second detection device shown in FIG. 1;
FIG. 3 is an explosive schematic diagram of a first detection device / a second detection device shown in FIG. 2;
FIG. 4 is a first structural schematic diagram of a first detection device / a second detection device shown in FIG. 2 after a housing is hidden;
FIG. 5 is a structural schematic diagram of a fifth calibration member and a third bracket shown in FIG. 4;
FIG. 6 is an explosive schematic diagram of a fifth calibration member and a third bracket shown in FIG. 5;
FIG. 7 is a second structural schematic diagram of a first detection device / a second detection device shown in FIG. 2 after a housing is hidden;
FIG. 8 is a structural schematic diagram of an image acquisition unit shown in FIG. 7;
FIG. 9 is an explosive schematic diagram of an image acquisition unit shown in FIG. 8; and
FIG. 10 is a third structural schematic diagram of a first detection device / a second detection device shown in FIG. 2 after a housing is hidden.

In the drawings, the reference numerals are listed:
1000-four-wheel aligner; 101-first detection device; 102-second detection device; 110-mounting base; 111-base; 111a-magnetic attraction surface; 1111-magnetic attraction member; 1112-indication unit; 112-support frame; 113-mounting plate; 1131-mounting surface; 1201-first image acquisition module; 1202-second image acquisition module; 121-image acquisition unit; 1211-camera; 12111-lens; 1212-fill light; 12121-substrate; 1212a-through hole; 12122-light-emitting member; 1213-first bracket; 1214-second bracket; 130-control device; 131-first control member; 132-second control member; 133-third control member; 134-fourth control member; 135-fifth control member; 1401-first position detection module; 1402-second position detection module; 141-fifth calibration member; 1411-light plate; 1412-diffuser plate; 1413-target plate; 142-image acquisition member; 143-third bracket; 144-fourth bracket; 150-housing; 151-shell; 1511-first shell; 1512-second shell; 1513-third shell; 1514-first window; 1515-second window; 1516-handle; 152-light-transmitting member; 201-first calibration member; 202-second calibration member; 203-third calibration member; 204-fourth calibration member; 300-hub clamping device; 2000-vehicle; 2100-wheel; and 3000-bearing mechanism.

### DETAILED DESCRIPTION OF EMBODIMENTS

In order to clarify the technical problems to be solved by the present application, technical solutions and beneficial effects, the present application is further described in detail in conjunction with the accompanying drawings and embodiments. It should be understood that the specific embodiments described herein are only configured to explain the present application and are not configured to limit the present application.

Unless otherwise defined, all technical and scientific terms used herein have the same meaning as those generally understood by technicians in the technical field of the present application; the terms used herein are only for the purpose of describing specific embodiments and are not intended to limit the present application; the terms "including" and "having" in the application and claims of the present application and the above-mentioned drawings and any variations thereof are intended to cover non-exclusive inclusions.

In the description of the embodiments of the present application, the technical terms "first", "second", etc. are only configured to distinguish different objects, and cannot be understood as indicating or implying relative importance or implicitly indicating the number, specific order or primary and secondary relationship of the indicated technical features. Therefore, the features defined as "first" and "second" can explicitly or implicitly include one or more of the features.

The reference to "embodiment" in the present application means that the specific features, structures or features described in conjunction with the embodiment can be included in at least one embodiment of the present application. The phrase appearing in various places in the application does not necessarily refer to the same embodiment, nor is it an independent or alternative embodiment that is mutually exclusive with other embodiments. It is explicitly and implicitly understood by those skilled in the art that the embodiments described herein can be combined with other embodiments in any suitable manner.

In the description of the embodiments of the present application, the term "and/or" is merely a description of the association relationship of the associated objects, indicating that there can be three relationships, such as A and/or B, which can represent: A exists alone, A and B exist at the same time, and B exists alone. In addition, the character "/" in the present application generally indicates that the associated objects before and after are in an "or" relationship.

In the description of the embodiments of the present application, the term "multiple" refers to more than two (including two), and similarly, "multiple groups" refers to more than two (including two groups), and "multiple pieces" refers to more than two (including two pieces). "Several" means one or more, unless otherwise clearly and specifically defined.

In the description of the embodiments of the present application, the technical terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential" and the like indicate the orientation or position relationship based on the orientation or position relationship shown in the drawings, which is only for the convenience of describing the embodiments of the present application and simplifying the description, and does not indicate or imply that the device or element referred to must have a specific orientation, be constructed and operated in a specific orientation, and therefore cannot be understood as a limitation on the embodiments of the present application.

In the description of the embodiments of the present application, unless otherwise clearly specified and limited, the technical terms "mount", "connect", "connected", "fix" and the like should be understood in a broad sense, for example, it can be a fixed connection, a detachable connection, or an integral connection; it can also be a mechanical connection or an electrical connection; it can be directly connected or indirectly connected through an intermediate medium, it can be the internal connection of two elements or the interaction relationship between two elements. For ordinary technicians in this field, the specific meanings of the above terms in the embodiments of the present application can be understood according to the specific circumstances.

In the description of the embodiments of the present application, unless otherwise clearly specified and limited, when an element is referred to as "fixed to" or "arranged on" another element, it can be directly on the other element or indirectly on the other element. When an element is referred to as "connected to" another element, it can be directly connected to the other element or indirectly connected to the other element.

After a long period of operation, the wear degree of the four tires of the vehicle varies, which will make the four wheels of the vehicle unable to be on the same horizontal plane. If it is not corrected in time, the driving trajectory of the vehicle is prone to deviate. Especially in dangerous sections, this deviation of the driving trajectory is very likely to cause traffic accidents.

In order to solve this problem, a four-wheel aligner is usually configured to detect the four-wheel alignment information of the vehicle to determine whether the wheels are deviated; in the detection process of some four-wheel aligners, calibration members are mounted on the four wheels of the vehicle, and an image acquisition device is mounted on the front side of the vehicle. The image acquisition device captures the calibration members on the four wheels and obtains the image information of the calibration members, and then obtains the four-wheel alignment information of the four vehicles based on the image information analysis; however, this test method requires the position of the image acquisition device and the position of the vehicle to be adjusted to the preset position, so that the four-wheel alignment information of the vehicle can be accurately analyzed based on the image information analysis. Therefore, in the actual detection process, it is usually necessary to adjust the position of the image acquisition device or the position of the vehicle multiple times, which increases the detection time and reduces the detection efficiency.

Based on this, the embodiment of the present application provides a four-wheel aligner, which places the first detection device and the second detection device on the left and right sides of the vehicle, and uses the first image acquisition module of the first detection device and the second image acquisition module of the second detection device to respectively capture the calibration members mounted on the four wheels to obtain the image information of the calibration members, and uses the image acquisition member of one of the first detection device and the second detection device to capture the fifth calibration member of another one of the first detection device and the second detection device to obtain the image information of the fifth calibration member. The control device can analyze the four-wheel alignment information of the vehicle according to the obtained image information, thus the detection is completed; the four-wheel aligner of the embodiment of the present application uses the image acquisition member to capture the image information of the fifth calibration member and the image information on the wheels, then the position information of the first detection device and the second detection device relative to the vehicle can be analyzed and calculated, which can reduce the requirements for the accuracy of the mounting position of the first detection device and the second detection device, the detection time is saved, and the detection efficiency of the four-wheel aligner is improved.

The four-wheel aligner of the embodiment of the present application can be configured to detect the four-wheel alignment information of the vehicle, such as: kingpin caster angle, kingpin inclination angle, front wheel camber angle, etc.

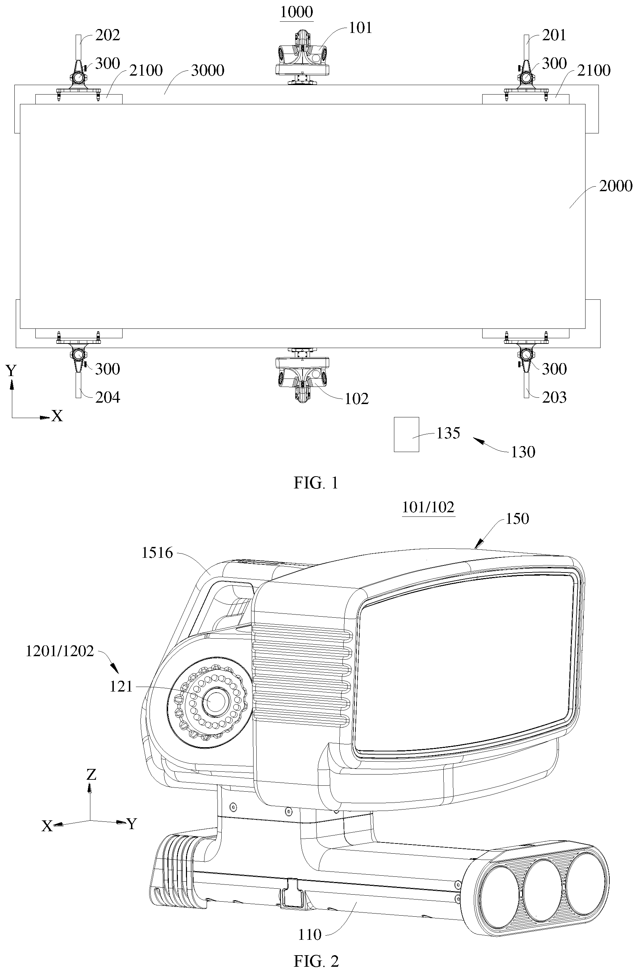

For the convenience of explanation, the length direction of the vehicle can refer to the X-axis in FIG. 1, the width direction of the vehicle can refer to the Y-axis in FIG. 1, and the height direction of the vehicle can refer to the Z-axis in FIG. 2.

As shown in FIGS. 1 to 4, in one embodiment of the present application, a four-wheel aligner 1000 is provided, which includes a first detection device 101, a second detection device 102 and a control device 130. The first detection device 101 is configured to be arranged on the left side of the vehicle 2000. The first detection device 101 includes a first position detection module 1401 and a first image acquisition module 1201. The first image acquisition module 1201 is configured to acquire first image information of a first calibration member 201 mounted on the left front wheel of the vehicle 2000 and second image information of a second calibration member 202 mounted on the left rear wheel of the vehicle 2000. The second detection device 102 is configured to be arranged on the right side of the vehicle 2000, and the second detection device 102 includes a second position detection module 1402 and a second image acquisition module 1202, and the second image acquisition module 1202 is configured to acquire the third image information of the third calibration member 203 mounted on the right front wheel of the vehicle 2000 and the fourth image information of the fourth calibration member 204 mounted on the right rear wheel of the vehicle 2000; in the first position detection module 1401 and the second position detection module 1402, one of them includes the fifth calibration member 141, and another one of them includes the image acquisition member 142, and the image acquisition member 142 is configured to capture the fifth image information of the fifth calibration member 141; the control device 130 is connected to the first image acquisition module 1201, the second image acquisition module 1202 and the image acquisition member 142 to receive the first image information, the second image information, the third image information, the fourth image information and the fifth image information, and analyze the four-wheel alignment information of the vehicle 2000 according to the first image information, the second image information, the third image information, the fourth image information and the fifth image information.

Taking the forward direction of the vehicle 2000 as a reference, the front, rear, left and right sides of the vehicle 2000 are obtained. The left and right sides of the vehicle 2000 can refer to the two sides of the vehicle 2000 that are relatively distributed along the width direction. The wheel 2100 located on the left front side of the vehicle 2000 is the left front wheel, the wheel 2100 located on the left rear side of the vehicle 2000 is the left rear wheel, the wheel 2100 located on the right front side of the vehicle 2000 is the right front wheel, and the wheel 2100 located on the right rear side of the vehicle 2000 is the right rear wheel; calibration members are mounted on all four wheels 2100 of the vehicle 2000. The calibration member mounted on the left front wheel is the first calibration member 201, the calibration member mounted on the left rear wheel is the second calibration member 202, the calibration member mounted on the right front wheel is the third calibration member 203, and the calibration member mounted on the right rear wheel is the fourth calibration member 204.

The calibration member can refer to a component that can be captured by the image acquisition module to obtain image information. The calibration member includes a specific pattern or feature point that can be captured by the image acquisition module and used for calculation; for example, a checkerboard or dot pattern, etc. For example, during the detection process, the image acquisition module captures the image information of the calibration member, and then analyzes the feature points in the image information and uses these points to calculate the four-wheel alignment information of the vehicle 2000. The structures of the first calibration member 201, the second calibration member 202, the third calibration member 203 and the fourth calibration member 204 can be the same or different.

In some examples, the calibration member can be mounted on the wheel hub of the wheel 2100 through the hub clamping device 300, and the stability and reliability of the calibration member are conducive to improving the detection accuracy of the four-wheel aligner 1000. In other examples, the calibration member can also be fixed to the wheel 2100 by screwing, clamping, bonding, etc.

The first detection device 101 can refer to a detection device mounted on the left side of the vehicle 2000. The first detection device 101 includes a first image acquisition module 1201 and a first position detection module 1401. The first image acquisition module 1201 can capture image information of the first calibration member 201 and the second calibration member 202. The image information including the first calibration member 201 is the first image information, and the image information including the second calibration member 202 is the second image information.

In some examples, the first detection device 101 and the second detection device 102 are placed on the front side or the rear side of the vehicle 2000, so that the first image acquisition module 1201 simultaneously captures the first calibration member 201 and the second calibration member 202 and obtains one image information, the image information includes the first calibration member 201 and the second calibration member 202, that is, the first image information and the second image information are the same image information.

In some examples, the first detection device 101 and the second detection device 102 are placed between the front and rear wheels of the vehicle 2000, so that the first image acquisition module 1201 separately captures the first calibration member 201 and the second calibration member 202 and obtains two image information, one of which includes the first calibration member 201, and another one includes the second calibration member 202, that is, the first image information and the second image information are two separate image information.

In some examples, the first image acquisition module 1201 can be, but is not limited to, a camera 1211 or a video camera.

The second detection device 102 can refer to a detection device mounted on the right side of the vehicle 2000, the second detection device 102 includes a second image acquisition module 1202 and a second position detection module 1402, and the second image acquisition module 1202 can capture the image information of the third calibration member 203 and the fourth calibration member 204. The image information including the third calibration member 203 is the third image information, and the image information including the fourth calibration member 204 is the fourth image information. The second image acquisition module 1202 can be, but is not limited to, a camera 1211 or a video camera.

In some examples, the first detection device 101 and the second detection device 102 are placed on the front or rear side of the vehicle 2000, so that the second image acquisition module 1202 simultaneously captures the third calibration member 203 and the fourth calibration member 204 to obtain one image information, the image information includes the third calibration member 203 and the fourth calibration member 204, that is, the third image information and the fourth image information are the same image information.

In some examples, the first detection device 101 and the second detection device 102 are placed in the middle position of the side of the vehicle 2000, so that the second image acquisition module 1202 separately captures the third calibration member 203 and the fourth calibration member 204 to obtain two image information, one of which includes the third calibration member 203 and another one of which includes the fourth calibration member 204, that is, the third image information and the fourth image information are two separate image information.

In some examples, the first position detection module 1401 includes an image acquisition member 142, and the second position detection module 1402 includes a fifth calibration member 141, or the first position detection module 1401 includes a fifth calibration member 141, and the second position detection module 1402 includes an image acquisition member 142.

The fifth calibration member 141 and the image acquisition member 142 are respectively located on the left and right sides of the vehicle 2000, and the image acquisition member 142 is arranged opposite to the fifth calibration member 141. The image acquisition member 142 captures the fifth calibration member 141 to obtain image information of the fifth calibration member 141, that is, the fifth image information.

The image acquisition member 142 can refer to a component capable of capturing an image, such as a camera 1211, a video camera, etc.

The fifth calibration member 141 can refer to a component capable of being captured by the image acquisition member 142 to obtain image information. The fifth calibration member 141 includes a specific pattern or feature point that can be captured by the image acquisition member 142 and used for calculation; such as, a checkerboard or dot pattern, etc. For example, during the detection process, the image acquisition member 142 captures the image information of the fifth calibration member 141, and then analyzes the feature points in the image information and uses these feature points to calculate the position information between the first detection device 101 and the second detection device 102. The structure of the fifth calibration member 141 can be the same as or different from the structure of the first calibration member 201.

The control device 130 can refer to a component capable of performing data transmission with the first image acquisition module 1201, the second image acquisition module 1202 and the image acquisition member 142; the control device 130 and the first image acquisition module 1201, the second image acquisition module 1202 and the image acquisition member 142 can be connected via a harness in a wired manner or in a wireless manner; the control device 130 can receive the first image information, the second image information, the third image information, the fourth image information and the fifth image information fed back by the first image acquisition module 1201, the second image acquisition module 1202 and the image acquisition member 142, and analyze to obtain the position information between the first detection device 101 and the second detection device 102 according to the fifth image information, and the control device 130 then combines the position information between the first detection device 101 and the second detection device 102, the first image information, the second image information, the third image information and the fourth image information, to analyze and obtain the position information of the four wheels of the vehicle 2000 relative to the first detection device 101 and the second detection device 102, and these position information and the obtained image information are used for calculating and analyzing to obtain the four-wheel alignment information of the vehicle 2000. The control device 130 can be, but is not limited to, components such as a circuit board, a tablet, and a mobile phone, etc.

By adopting the technical solution of the embodiment, during detection, the left front wheel, left rear wheel, right front wheel, and right rear wheel of the vehicle 2000 are respectively mounted with the first calibration member 201, the second calibration member 202, the third calibration member 203, and the fourth calibration member 204; the first detection device 101 and the second detection device 102 are respectively mounted on the left and right sides of the vehicle 2000, the first image acquisition module 1201 of the first detection device 101 captures the first calibration member 201 and the second calibration member 202 to obtain the first image information and the second image information, and the second image acquisition module 1202 of the second detection device 102 captures the third calibration member 203 and the fourth calibration member 204 to obtain the third image information and the fourth image information. In the first position detection module 1401 and the second position detection module 1402, one of them includes the fifth calibration member 141, and another one of them includes the image acquisition member 142, the image acquisition member 142 captures the fifth calibration member 141 to obtain the fifth image information; the first image acquisition module 1201, the second image acquisition module 1202 and the image acquisition member 142 feed back the first image information, the second image information, the third image information, the fourth image information and the fifth image information to the control device 130; the control device 130 analyzes the first image information, the second image information, the third image information, the fourth image information and the fifth image information to obtain the four-wheel alignment information of the vehicle 2000.

During the detection process, the control device 130 can analyze to obtain the position information between the first detection device 101 and the second detection device 102 and the position information of the four wheels 2100 according to the first image information, the second image information, the third image information, the fourth image information and the fifth image information, and these position information are used to calculate and analyze to obtain the four-wheel alignment information of the vehicle 2000; the position information between the first detection device 101 and the second detection device 102 and the position information of the four wheels 2100 can be configured to obtain the position information of the first detection device 101 and the second detection device 102 relative to the vehicle 2000. This method of using image information to analyze and obtain position information can reduce the requirements for the accuracy of the mounting position of the first detection device 101 and the first detection device 101, the mounting time of the first detection device 101 and the second detection device 102 is saved, the detection time of the four-wheel aligner 1000 is reduced, and the detection efficiency of the four-wheel aligner 1000 and the convenience of using the four-wheel aligner 1000 are improved.

In some embodiments, the four-wheel aligner 1000 is used in conjunction with a bearing mechanism 3000 (e.g., a lifting machine, etc.), the vehicle 2000 stays on the bearing mechanism 3000, and the bearing mechanism 3000 raises the vehicle 2000 to facilitate the detection of the four-wheel aligner 1000. The first detection device 101 and the second detection device 102 are fixed to the bearing mechanism 3000, and the first detection device 101 and the second detection device 102 are fixed and not easy to shake, which is conducive to improving the detection accuracy of the four-wheel aligner 1000.

In some embodiments, the first position detection module 1401 and the second position detection module 1402 include the image acquisition member 142 and the fifth calibration member 141; the image acquisition member 142 of the first position detection module 1401 is configured to capture the sixth image information of the fifth calibration member 141 of the second position detection module 1402; the image acquisition member 142 of the second position detection module 1402 is configured to capture the seventh image information of the fifth calibration member 141 of the first position detection module 1401; the image acquisition member 142 of the first position detection module 1401 and the image acquisition member 142 of the second position detection module 1402 are both connected to the control device 130, so that the control device 130 can receive the sixth image information and the seventh image information, and analyze the position information between the first detection device 101 and the second detection device 102 according to the sixth image information and the seventh image information.

The first position detection module 1401 and the second position detection module 1402 both include the fifth calibration member 141 and the image acquisition member 142.

During detection, the image acquisition member 142 of the first position detection module 1401 captures the fifth calibration member 141 of the second position detection module 1402 to obtain image information of the fifth calibration member 141 of the second position detection module 1402, which is the sixth image information; and the image acquisition member 142 of the second position detection module 1402 captures the fifth calibration member 141 of the first position detection module 1401 to obtain image information of the fifth calibration member 141 of the first position detection module 1401, which is the seventh image information. The sixth image information can be referred to as the fifth image information, or the seventh image information can be referred to as the fifth image information, or both the sixth image information and the seventh image information can be referred to as the fifth image information.

Data can be transmitted between the image acquisition member 142 of the first position detection module 1401 and the image acquisition member 142 of the second position detection module 1402 and the control device 130. The image acquisition member 142 of the first position detection module 1401 and the image acquisition member 142 of the second position detection module 1402 can be connected to the control device 130 by a harness in a wired manner or in a wireless manner; the control device 130 can receive the sixth image information and the seventh image information, and analyze the position information between the first detection device 101 and the second detection device 102 according to the sixth image information and the seventh image information.

By adopting the technical solution of the embodiment, in the analytical calculation of the control device 130, the sixth image information and the seventh image information can be referenced to each other, which is conducive to improving the accuracy of the position information between the first detection device 101 and the second detection device 102 obtained by analytical calculation, and is conducive to improving the detection accuracy of the four-wheel aligner 1000.

For the convenience of explanation, the structure of the first detection device 101 is taken as an example for explanation below. The structure of the second detection device 102 can refer to the structure of the first detection device 101, or it can be different from the structure of the first detection device 101.

In some embodiments, the first detection device 101 includes a housing150, the housing150 is covered outside the first image acquisition module 1201 and the first position detection module 1401 to protect the first image acquisition module 1201 and the first position detection module 1401; the housing150 is provided with a first window 1514, and the first window 1514 is configured to expose the fifth calibration member 141 for the corresponding image detection member to capture.

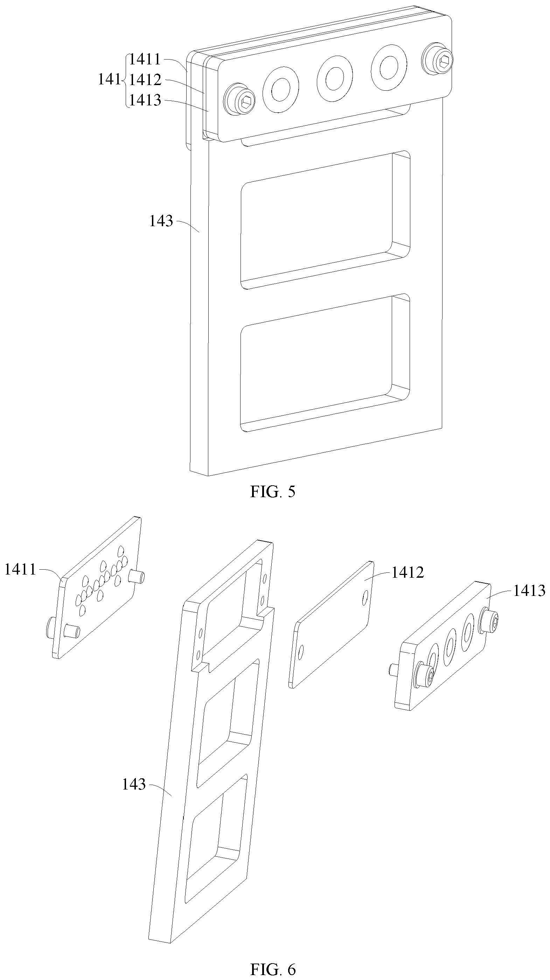

In some embodiments, as shown in FIGS. 5 and 6, the fifth calibration member 141 is a self-luminous calibration member.

It can be understood that the fifth calibration member 141 has its own light source, so as to realize the self-luminescence of the fifth calibration member 141.

In some examples, the light emitted by the fifth calibration member 141 is emitted from the first window 1514 to facilitate the corresponding image detection member to capture.

By adopting the technical solution of the embodiment, the fifth calibration member 141 adopts a self-luminous calibration member, which can emit light by itself, which is conducive to improving the clarity of the fifth image information obtained by the corresponding image acquisition member 142. The corresponding image acquisition member 142 has a good capturing effect, which is conducive to improving the detection accuracy of the four-wheel aligner 1000.

In some embodiments, the fifth calibration member 141 includes a light plate 1411, a diffuser plate 1412 and a target plate 1413, and the light plate 1411, the diffuser plate 1412 and the target plate 1413 are stacked, and the diffuser plate 1412 is located between the light plate 1411 and the target plate 1413.

The light plate 1411 can refer to an electronic board for lighting or display, and the light plate 1411 can be, but is not limited to, an LED light plate 1411, an LCD backlight light plate 1411, an OLED light plate 1411, a flexible light plate 1411, a UV light plate 1411, and an infrared light plate 1411.

The diffuser plate 1412, also known as a diffusion plate, can evenly scatter light to reduce direct reflection and refraction of light. The diffuser plate 1412 can be made of materials such as a polymethyl methacrylate, a polystyrene, polycarbonate, and a polypropylene.

The target plate 1413 can refer to a feature image or feature points that can be captured by the image acquisition member 142. The surface of the target plate 1413 facing away from the light plate 1411 forms a calibration surface, and the feature image or feature points is located on the calibration surface for the corresponding image acquisition member 142 to capture.

In some examples, the target plate 1413 is located between the first window 1514 and the diffuser plate 1412, such that the target plate 1413 is closest to the first window 1514, so that the corresponding image acquisition member 142 can capture the feature image or feature points of the target plate 1413.

By adopting the technical solution of the embodiment, the light plate 1411, the diffuser plate 1412 and the target plate 1413 are stacked in sequence, so that the light emitted by the light plate 1411 is scattered by the diffuser plate 1412 and then emitted from the target plate 1413. In this way, the light emitted by the target plate 1413 has good uniformity, which is conducive to the corresponding image acquisition member 142 to obtain clearer fifth image information, so as to improve the detection accuracy of the four-wheel aligner 1000.

In some embodiments, the surface of the target plate 1413 facing away from the light plate 1411 is provided with a plurality of calibration areas, and the distances between at least two calibration areas and the light plate 1411 are different.

It can be understood that the surface of the target plate 1413 facing away from the light plate 1411 is uneven, and the uneven surface is divided into a plurality of calibration areas, each calibration area has a feature image or feature points to facilitate the corresponding image acquisition member 142 to capture; the distance between at least one calibration area and the light plate 1411 is different from the distance between another calibration area and the light plate 1411.

In some examples, the uneven surface is divided into three calibration areas, and the distances between the three calibration areas and the light plate 1411 are different, and the uneven surface forms a step structure. In other examples, the uneven surface can also be other structures.

By adopting the technical solution of the embodiment, the distances between at least two calibration areas and the light plate 1411 are different, and a three-dimensional calibration surface can be formed. According to the three-dimensional calibration surface, more accurate position information between the first detection device 101 and the second detection device 102 can be analyzed, which is conducive to improving the detection accuracy of the four-wheel aligner 1000.

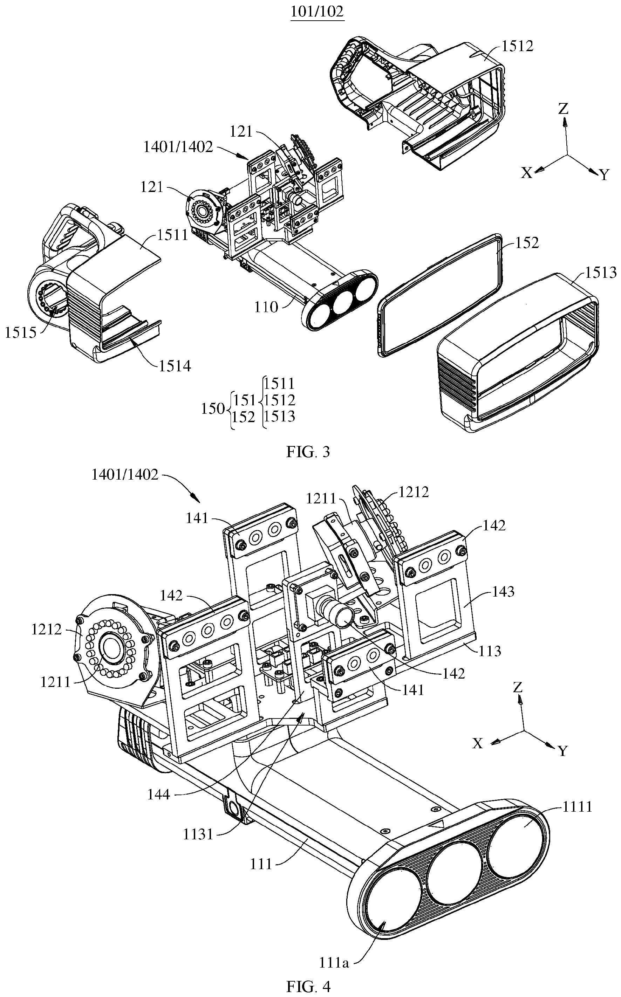

In some embodiments, as shown in FIG. 4, in the first position detection module 1401 or the second position detection module 1402, a plurality of the fifth calibration member 141 is provided, and along the width direction of the vehicle 2000, the distances between at least two fifth calibration members 141 and the vehicle 2000 are different; the projections of the two fifth calibration members 141 with different distances from the vehicle 2000 along the width direction of the vehicle 2000 at least partially do not overlap.

The first position detection module 1401 can include a plurality of fifth calibration members 141, and the second position detection module 1402 can also include a plurality of fifth calibration members 141. The first position detection module 1401 can adopt the following structure, and the second position detection module 1402 can also adopt the following structure.

Along the width direction of the vehicle 2000, at least two fifth calibration members 141 have different distances from the vehicle 2000; in some examples, the first window 1514 is arranged toward the vehicle 2000, the distances between the fifth calibration members 141 and the vehicle 2000 are different, and the distances between the first window 1514 and the fifth calibration members 141 are also different. Then, by measuring the distances between the first window 1514 and the fifth calibration members 141, it can be determined that the distances between the fifth calibration members 141 and the vehicle 2000 are different. The number of fifth calibration members 141 with different distances from the vehicle 2000 can be, but is not limited to, two, three or four.

The projections of the two fifth calibration members 141 at different distances from the vehicle 2000 along the width direction of the vehicle 2000 at least partially do not overlap. It can be understood that, viewed along the width direction of the vehicle 2000, the fifth calibration members 141 at different distances from the vehicle 2000 do not completely overlap, so that the calibration surfaces of the two fifth calibration members 141 can form a three-dimensional calibration structure. According to the three-dimensional calibration structure, more accurate position information between the first detection device 101 and the second detection device 102 can be analyzed, which is conducive to improving the detection accuracy of the four-wheel aligner 1000; in addition, the design of the plurality of fifth calibration members 141 makes the position arrangement of the plurality of fifth calibration members 141 more flexible, and the distances between the fifth calibration members 141 can be arranged larger, so that the calibration structure is more three-dimensional to further improve the accuracy of the position information between the first detection device 101 and the second detection device 102, which is conducive to improving the detection accuracy of the four-wheel aligner 1000.

In some embodiments, four fifth calibration members 141 are provided, the first of the four fifth calibration members 141 and the third of the four fifth calibration members 141 are arranged at intervals along the length direction of the vehicle 2000; the second of the four fifth calibration members 141 is located at the lower side of the first of the four fifth calibration members 141 and at the side of the first of the four fifth calibration members 141 close to the vehicle 2000, and the fourth of the four fifth calibration members 141 is located at the upper side of the first of the four fifth calibration members 141 and at the side of the first of the four fifth calibration members 141 away from the vehicle 2000.

It can be understood that four fifth calibration members 141 are provided, the first of the four fifth calibration members 141 and the third of the four fifth calibration members 141 are arranged at intervals along the length direction of the vehicle 2000, so that there is a spacing between the first of the four fifth calibration members 141 and the third of the four fifth calibration members 141 in the length direction of the vehicle 2000, and the second of the four fifth calibration members 141 is located at the lower side of the first of the four fifth calibration members 141, so that there is a height difference between the second of the four fifth calibration members and the first of the four fifth calibration members 141 in the height direction of the vehicle 2000. The second of the four fifth calibration members 141 is located on the side of the first of the four fifth calibration members 141 close to the vehicle 2000, so that there is a spacing between the second of the four fifth calibration members 141 and the first of the four fifth calibration members 141 along the width direction of the vehicle 2000, and the fourth of the four fifth calibration members 141 is located on the upper side of the first of the four fifth calibration members 141, so that there is a height difference between the fourth of the four fifth calibration members 141 and the first of the four fifth calibration members 141 along the height direction of the vehicle 2000, and the fourth of the four fifth calibration members 141 is located on the side of the first of the four fifth calibration members 141 away from the vehicle 2000, so that there is a spacing between the fourth of the four fifth calibration members 141 and the first of the four fifth calibration members 141 along the width direction of the vehicle 2000, and there is a spacing between the fourth of the four fifth calibration members 141 and the second of the four fifth calibration members 141 along the width direction of the vehicle 2000.

In some examples, when viewed along the height direction of the vehicle 2000, the four fifth calibration members 141 are distributed up, down, left, and right; when viewed along the width direction of the vehicle 2000, the four fifth calibration members 141 are distributed up, down, left, and right.

By adopting the technical solution of the embodiment, the four fifth calibration members 141 can form a three-dimensional calibration structure. The three-dimensionality of the three-dimensional calibration structure is better, and more accurate position information between the first detection device 101 and the second detection device 102 can be analyzed, which is conducive to improving the accuracy of the four-wheel alignment detection of the vehicle 2000; in addition, the four fifth calibration members 141 are distributed in this way, and the structure is simple and easy to process.

In some embodiments, the image acquisition member 142 is located in the middle of the plurality of fifth calibration members 141.

The image acquisition member 142 is located at the center of the arrangement of the plurality of fifth calibration members 141; for example, the four fifth calibration members 141 are spaced apart along the circumference of the image acquisition member 142, and the image acquisition member 142 is located between the first of the four fifth calibration members 141 and the third of the four fifth calibration members 141, and the image acquisition member 142 is also located between the second of the four fifth calibration members 141 and the fourth of the four fifth calibration members 141.

By adopting the technical solution of the embodiment, the image acquisition member 142 is located in the middle of the plurality of fifth calibration members 141. When the first detection device 101 and the second detection device 102 capture each other, the first calibration member 201 of the first detection device 101 can be located at or near the center of the capturing field of view of the image acquisition member 142 of the second detection device 102, and the first calibration member 201 of the second detection device 102 can be located at or near the center of the capturing field of view of the image acquisition member 142 of the first detection device 101. In this way, clearer sixth image information and seventh image information can be obtained, so that more accurate position information between the first detection device 101 and the second detection device 102 can be analyzed, which is conducive to improving the detection accuracy of the four-wheel aligner 1000.

In some embodiments, the light emitted by the fifth calibration member 141 is invisible light.

Invisible light refers to light in the electromagnetic spectrum that cannot be perceived by the human eye. Invisible light can be but is not limited to ultraviolet rays and infrared rays.

By adopting the technical solution of the embodiment, the light emitted by the fifth calibration member 141 is invisible light, which can be distinguished from ambient light, thereby the influence of ambient light on the light emitted by the fifth calibration member 141 is reduced, the clarity of the fifth image information is improved, which is conductive to improving the detection accuracy of the four-wheel aligner 1000.

In some embodiments, as shown in FIG. 2 and FIG. 3, the housing 150 includes a shell 151 and a light-transmitting member 152. The fifth calibration member 141 is located in the shell 151. The shell 151 is provided with a first window 1514 on the side facing the vehicle 2000. The light-transmitting member 152 is mounted on the first window 1514 and seals the first window 1514. The light-transmitting member 152 can allow at least part of the light emitted by the fifth calibration member 141 to pass through. The light-transmitting member 152 can block at least part of the visible light.

The housing150 can refer to a hollow shell structure. The housing150 includes a shell 151 and a light-transmitting member 152. The shell 151 is hollow inside to form a receiving space. The fifth calibration member 141 is located in the receiving space. The shell 151 is provided with a first window 1514 on the side facing the vehicle 2000. The first window 1514 is connected to the receiving space. The first window 1514 allows the light emitted by the fifth calibration member 141 to pass through.

The light-transmitting member 152 refers to objects or materials that can transmit light. The material of the light-transmitting member 152 can be, but is not limited to, a glass or a transparent plastic.

The light-transmitting member 152 allows at least part of the light emitted by the fifth calibration member 141 to pass through. It can be understood that the light emitted by the fifth calibration member 141 can all pass through the light-transmitting member 152, or part of the light emitted by the fifth calibration member 141 passes through the light-transmitting member 152, and the other part of the light does not pass through the light-transmitting member 152, so that the first image acquisition member 142 can capture the luminous fifth calibration member 141.

The light-transmitting member 152 can block at least part of the visible light. It can be understood that all the visible light cannot pass through the light-transmitting member 152 to enter the shell 151, or part of the visible light can pass through the light-transmitting member 152 to enter the shell 151, and the other part of the visible light cannot pass through the light-transmitting member 152 to enter the shell 151.

By adopting the technical solution of the embodiment, the light-transmitting member 152 can at least block part of the ambient visible light from entering the shell 151, which can reduce the influence of the external ambient visible light on the fifth calibration member 141, the clarity of the fifth image information is improved, which is conductive to improve the detection accuracy of the four-wheel aligner 1000.

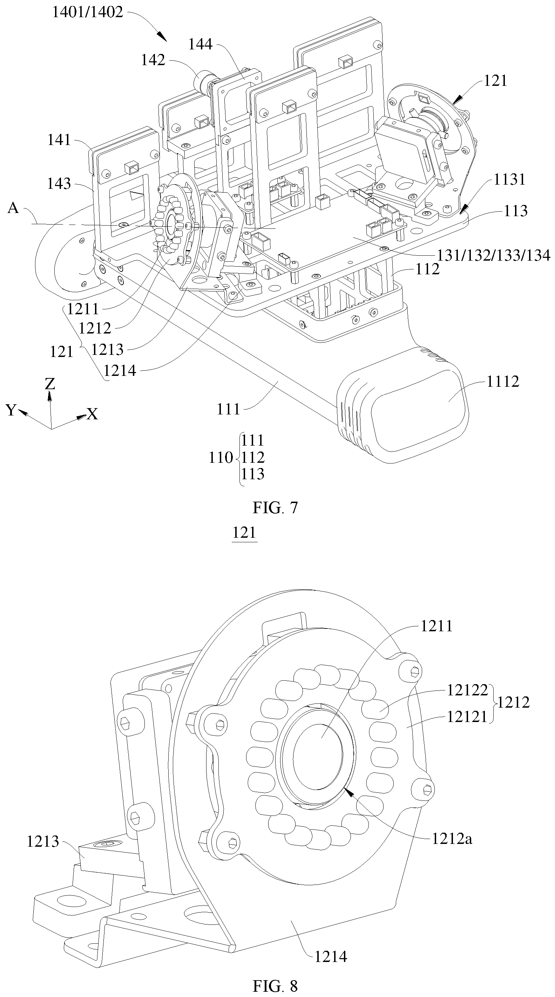

In some embodiments, as shown in FIG. 7, the first detection device 101 further includes a mounting base 110, and the first image acquisition module 1201 includes two image acquisition units 121 mounted on the mounting base 110, and one of the image acquisition units 121 is provided t he side of the mounting base 110 facing the first calibration member 201 to acquire the first image; and another image acquisition unit 121 is provided on the side of the mounting base 110 facing the second calibration member 202 to acquire the second image.

The mounting base 110 can refer to a component for supporting the first position detection module 1401 and the first image acquisition module 1201, and the mounting base 110 can be fixed on the side of the bearing mechanism 3000 (for example: lifting machine, etc.) to achieve the fixation of the detection device of the vehicle 2000.

The image acquisition unit 121 can refer to a component capable of capturing image information of a calibration member; among the two image acquisition units 121, one image acquisition unit 121 is configured to capture the first calibration member 201 to obtain first image information, and another image acquisition unit 121 is configured to capture the second calibration member 202 to obtain second image information.

In some examples, the first detection device 101 is located between the front and rear wheels on the left side of the vehicle 2000, and the two image acquisition units 121 are symmetrically arranged front and back, so as to facilitate the acquisition of image information of the first calibration member 201 and the second calibration member 202.

By adopting the technical solution of the embodiment, the first detection device 101 can integrate two image acquisition units 121 at the same time, which is conducive to improving the integration of the first detection device 101 and facilitating the detection of the first detection device 101; the first detection device 101 can simultaneously acquire image information located at the first calibration member 201 and the second calibration member 202, thereby the detection efficiency of the first detection device 101 is improved; in addition, the arranging of the two image acquisition units 121 enables the first detection device 101 and the second detection device 102 to be arranged in the middle position of the left and right sides of the vehicle 2000. Compared with the method in which the first detection device 101 and the second detection device 102 are arranged at the front or rear side of the vehicle 2000, the site area required for the detection of the four-wheel aligner 1000 can be reduced, and the detection of the four-wheel aligner 1000 is more convenient and quick.

In some embodiments, the lens 12111 of the image acquisition unit 121 is arranged toward the vehicle 2000 and tilted upward.

The lens 12111 of the image acquisition unit 121 can refer to an optical component composed of a plurality of optical lenses in the image acquisition unit 121, and the optical axis of the lens 12111 can refer to the axis of the optical lens, which can be referred to as the center line A in FIG. 7; the lens 12111 of the image acquisition unit 121 is disposed toward the vehicle 2000 and tilted upward, and the optical axis of the lens 12111 is also disposed toward the vehicle 2000 and tilted upward, and when the first detection device 101 is in the detection state, the distance between the center of the optical lens closest to the object image side and the vehicle 2000 is smaller than the distance between the center of the optical lens away from the object image side and the vehicle 2000, and the center of the optical lens closest to the object image side is higher than the center of the optical lens away from the object image side.

By adopting the technical solution of the embodiment, the lens 12111 of the image acquisition unit 121 is arranged toward the vehicle 2000, so that the wheels 2100 of vehicles 2000 of different widths can fall into the field of view of the image acquisition unit 121, and the image acquisition unit 121 can meet the detection requirements of the wheels 2100 of vehicles 2000 of different widths; and the lens 12111 of the image acquisition unit 121 is tilted upward, so that the wheels 2100 of vehicles 2000 of different heights can fall into the field of view of the image acquisition unit 121, and the image acquisition unit 121 can meet the detection requirements of the wheels 2100 of vehicles 2000 of different heights; in this way, the four-wheel aligner 1000 can meet the detection requirements of different models, and the versatility of the four-wheel aligner 1000 is improved.

In some embodiments, the angle between the optical axis of the lens 12111 of the image acquisition unit 121 and the horizontal plane ranges from 12.5° to 18.5°.

The angle between the optical axis of the lens 12111 of the image acquisition unit 121 and the horizontal plane is a. When the first detection device 101 is in the detection state, the α can refer to the angle formed by the optical axis of the lens 12111 of the image acquisition unit 121 and the horizontal plane; the horizontal plane can refer to a plane perpendicular to the vertical direction or a plane approximately perpendicular to the vertical direction, and the horizontal plane can refer to the XY plane in FIG. 7.

The design of α≥12.5°enables the lens 12111 of the image acquisition unit 121 to tilt upward, which can meet the detection requirements of vehicles 2000 of different heights. The design of α≤18.5°enables the lens 12111 of the image acquisition unit 121 to not tilt upward too much, so as to cause the wheel 2100 to be located outside the capturing field of view of the image acquisition unit 121.

12.5°≤α≤18.5°, which can be understood that the value of α can be 12.5°, 18.5°or any value between 12.5° and 18.5°; for example, the value of α can be but is not limited to 12.5°, 13°, 14°, 15°, 16°, 17°, 18°, and 18.5°.

By adopting the technical solution of the embodiment, the wheels 2100 of most vehicles of different heights can be located within the capturing field of view of the image acquisition unit 121, so that the first detection device 101 can meet the detection requirements of the wheels 2100 of most vehicles of different heights.

In some embodiments, the angle between the optical axis of the lens 12111 of the image acquisition unit 121 and the auxiliary plane ranges from 14° to 20°, and the auxiliary plane is perpendicular to the width direction of the vehicle 2000.

When the first detection device 101 is in the detection state, the auxiliary plane can refer to a vertical plane perpendicular to or approximately perpendicular to the width direction of the vehicle 2000, and the auxiliary plane can refer to the XZ plane in FIG. 7; the width direction of the vehicle 2000 is parallel to the width direction of the lifting machine, and the width direction of the vehicle 2000 can also refer to the width direction of the lifting machine.

The angle between the optical axis of the lens 12111 of the image acquisition unit 121 and the auxiliary plane is β, where 14°≤β≤20°; it can be understood that the value of β can be 14°, 20°, or any value between 14° and 20°; for example, the value of β can be, but is not limited to, 14°, 15°, 16°, 17°, 18°, 19°, and 20°.

The design of β≥14°enables the lens 12111 of the image acquisition unit 121 to tilt toward the vehicle 2000, which can meet the detection requirements of vehicles 2000 of different widths. The design of β≤20°enables the lens 12111 of the image acquisition unit 121 to not tilt too much toward the vehicle 2000, so as to cause the wheel 2100 to be located outside the capturing field of view of the image acquisition unit 121.

By adopting the technical solution of the embodiment, the wheels 2100 of most vehicles of different widths can be located within the field of view of the image acquisition unit 121, so that the first detection device 101 can meet the detection requirements of wheels 2100 of most vehicles of different widths.

In some embodiments, the angle between the optical axis of the lens 12111 of the image acquisition unit 121 and the horizontal plane ranges from12.5° to 18.5°, and the angle between the optical axis of the lens 12111 of the image acquisition unit 121 and the auxiliary plane ranges from 14° to 20°, and the auxiliary plane is perpendicular to the width direction of the vehicle 2000.

By adopting the technical solution of the embodiment, the wheels 2100 of most vehicles can be located within the field of view of the image acquisition unit 121, so that the first detection device 101 can meet the detection requirements of most vehicles of vehicles 2000.

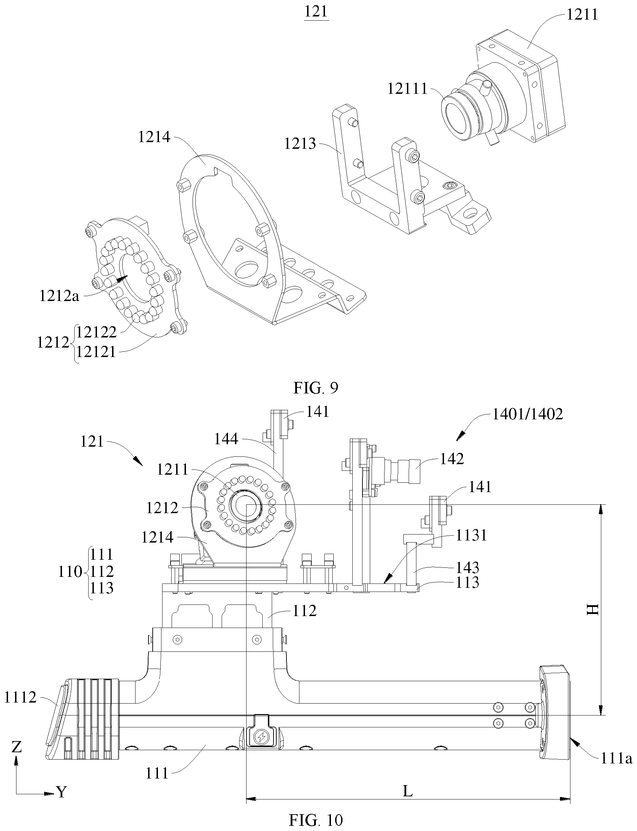

In some embodiments, as shown in FIGS. 8 and 9, the image acquisition unit 121 includes a camera 1211 and a fill light 1212, and the fill light 1212 is arranged outside the lens 12111 of the camera 1211.

The camera 1211 can refer to a component that can capture pictures, and the camera 1211 can be but not limited to a black and white camera, a color camera, an infrared camera, etc.

The fill light 1212 can be a lamp that can emit light, and the fill light 1212 can be but not limited to an LED lamp, an incandescent lamp, etc. The fill light 1212 can provide light to the camera 1211, so that the image information captured by the camera 1211 is clearer, which is conducive to improving the detection accuracy of the first detection device 101.

The fill light 1212 is arranged around the lens 12111 of the camera 1211. The fill light 1212 is an annular structure and is formed with a through hole 1212a. The lens 12111 of the camera 1211 is located in the through hole 1212a.

In some examples, the fill light 1212 is an annular light tube, which is arranged around the lens 12111 of the image acquisition unit 121.

In some examples, the fill light 1212 includes a substrate 12121 and a plurality of light-emitting members 12122 mounted on the substrate 12121. The substrate 12121 is provided with a through hole 1212a. The lens 12111 of the camera 1211 is arranged in the through hole 1212a. The plurality of light-emitting members 12122 are distributed along the circumference of the lens 12111 of the camera 1211.

The substrate 12121 can refer to a plate for supporting the light-emitting member 12122. The substrate 12121 can be a circuit board. The circuit board can supply power to the light-emitting member 12122 and can also support the light-emitting member 12122.

The light-emitting member 12122 can refer to a component capable of emitting light. The light-emitting member 12122 can be, but is not limited to, an LED, a light bulb, etc.

The through hole 1212a penetrates two opposite surfaces of the substrate 12121 along the thickness direction. The lens 12111 of the camera 1211 is penetrated in the through hole 1212a, so that the lens 12111 of the camera 1211 can be exposed from the through hole 1212a, thereby capturing the calibration member; the optical axis of the lens 12111 of the camera 1211 can coincide with or approximately coincide with the axis of the through hole 1212a, so as to facilitate the subsequent uniform distribution of the plurality of light-emitting members 12122 on the peripheral side of the lens 12111 of the camera 1211.

The number of light-emitting members 12122 is greater than or equal to two, for example: three, four, five, and ten.

The plurality of light-emitting members 12122 are distributed along the circumference of the lens 12111 of the camera 1211, and the plurality of light-emitting members 12122 are distributed at intervals along the circumference of the lens 12111 of the camera 1211.

In some examples, the plurality of light-emitting members 12122 are distributed in a circular array around the axis of the through hole 1212a, and the plurality of light-emitting members 12122 are arranged regularly, and the fill light uniformity of the camera 1211 is well, and the fill light effect is well. Among them, the plurality of light-emitting members 12122 can be distributed in one circle or a plurality of circles.

By adopting the technical solution of the embodiment, the fill light 1212 is arranged around the lens 12111 of the camera 1211, and light is emitted from the surrounding side of the lens 12111 of the camera 1211, and the fill light effect is well, which is conducive to improving the clarity of the image information captured by the camera 1211 and improving the detection accuracy of the four-wheel aligner 1000.

In some embodiments, the image acquisition unit 121 further includes a first bracket 1213 and a second bracket 1214 that are mounted on the mounting base 110 and spaced apart, the camera 1211 is mounted on the first bracket 1213, and the fill light 1212 is mounted on the second bracket 1214.

The first bracket 1213 and the second bracket 1214 are configured to fix the components of the camera 1211 and the fill light 1212 respectively; the camera 1211 can be fixed to the first bracket 1213 by fasteners (such as screws, screws, etc.), bonding, clamping, etc., and the fill light 1212 can be fixed to the second bracket 1214 by fasteners (such as screws, screws, etc.), bonding, clamping, etc.

For example, the first bracket 1213 can be formed by splicing a plurality of components, and the splicing of the plurality of components can easily form an inclined first fixing surface. By mounting the camera 1211 on the first fixing surface, the lens 12111 of the camera 1211 can be mounted obliquely, which reduces the difficulty of mounting the camera 1211 and improves the accuracy of the mounting position of the camera 1211; the first bracket 1213 can be an integrated structure or other structures.

For example, the second bracket 1214 can be formed by bending a plate, and the bent plate can easily form an inclined second fixing surface, and by mounting the fill light 1212 on the second fixing surface, the fill light 1212 can be mounted obliquely, which reduces the difficulty of mounting the fill light 1212; the inclination of the fill light 1212 can be adapted to the inclination of the lens 12111 of the camera 1211, which can improve the capturing effect of the camera 1211. In other examples, the second bracket 1214 can also be other structures.

The first bracket 1213 and the second bracket 1214 are arranged at intervals, so that there is a certain gap between the first bracket 1213 and the second bracket 1214, and the two do not contact each other.

By adopting the technical solution of the embodiment, the first bracket 1213 and the second bracket 1214 do not contact each other, and the camera 1211 and the fill light 1212 are relatively independently fixed, the impact of factors such as the shaking of the fill light 1212 on the camera 1211 is reduced, which is conducive to improving the clarity of the image information of the first calibration member 201 captured by the camera 1211, and the detection accuracy of the detection device of the vehicle 2000 is improved.

In some embodiments, the first position detection module 1401 and the first image acquisition module 1201 are both mounted on the mounting base 110, and the first position detection module 1401 is located on the side of the first image acquisition module 1201 facing the vehicle 2000. Such a distribution can facilitate the image acquisition unit 121 and the image acquisition member 142 to capture image information.

In some embodiments, as shown in FIGS. 4 to 6, the first position detection module 1401 further includes a third bracket 143 and a fourth bracket 144 fixed to the mounting base 110, the fifth calibration member 141 is mounted on the third bracket 143, and the image acquisition member 142 is mounted on the fourth bracket 144, so as to achieve the fixation of the fifth calibration member 141 and the image acquisition member 142.

In some examples, the third bracket 143 is located between the light plate 1411 and the diffuser plate 1412; and the light plate 1411, the diffuser plate 1412 and the target plate 1413 are fixed to the third bracket 143 together, and there is no need to fix the light plate 1411, the diffuser plate 1412 and the target plate 1413 separately, and the fixation of the second calibration member 202 is simpler; the light plate 1411 , the diffuser plate 1412 and the target plate 1413 can be fixed to the third bracket 143 by fasteners (e.g., screws, etc.).

In some embodiments, as shown in FIG. 7, the mounting base 110 is provided with a mounting surface 1131, and the first position detection module 1401 and the two image acquisition units 121 are mounted on the mounting surface 1131.

The mounting surface 1131 can refer to a surface of the mounting base 110 configured to support the first position detection module 1401 and the two image acquisition units 121. The mounting surface 1131 can be a plane, a stepped surface, etc.

In some examples, the third bracket 143, the fourth bracket 144, the first bracket 1213 and the second bracket 1214 can be fixed to the mounting surface 1131 by fasteners (e.g., screws), clamping, bonding, etc.

By adopting the technical solution of the embodiment, the first position detection module 1401 and the two image acquisition units 121 are mounted on the same surface, which can reduce the mounting error of the first position detection module 1401 and the two image acquisition units 121, which is conducive to improving the accuracy of the relative fixed position between the first position detection module 1401 and the two image acquisition units 121, and is conducive to improving the detection accuracy of the four-wheel aligner 1000.

In some embodiments, as shown in FIG. 7, the mounting base 110 includes a base 111, a support frame 112 and a mounting plate 113. The support frame 112 is connected between the base 111 and the mounting plate 113, so that the base 111 and the mounting plate 113 are spaced apart, and the surface of the mounting plate 113 facing away from the support frame 112 forms a mounting surface 1131.

The base 111 can refer to a portion of the mounting base 110 located at the bottom.

The mounting plate 113 can refer to a plate in the mounting base 110 for supporting the first position detection module 1401 and the two image acquisition units 121, and the mounting plate 113 can be, but is not limited to, a metal plate, a plastic plate, etc.

The support frame 112 can refer to a portion of the mounting base 110 connected between the mounting plate 113 and the base 111; the support frame 112 can lift the mounting plate 113 so that a gap is formed between the base 111 and the mounting plate 113. The support frame 112 is a frame structure with light weight, which is conducive to reducing the weight of the first detection device 101, so as to facilitate the use of the first detection device 101.

It should be noted that the height of the support frame 112 needs to be reasonably designed so that the first position detection module 1401 and the second position detection module 1402 can use the space between the bearing mechanism 3000 and the chassis of the vehicle 2000 to capture each other and reduce occlusion.

By adopting the technical solution of the embodiment, the first position detection module 1401 and the two image acquisition units 121 are mounted on the mounting plate 113, and the mounting operation is simple. The surface flatness of the mounting plate 113 is well, and the surface of the mounting surface 1131 facing away from the support frame 112 forms the mounting surface 1131. The mounting surface 1131 has good flatness, which can effectively reduce the mounting error of the first position detection module 1401 and the two image acquisition units 121, which is conducive to improving the accuracy of the relative fixed position between the first position detection module 1401 and the two image acquisition units 121, and is conducive to improving the detection accuracy of the first detection device 101. In addition, the support frame 112 can raise the first position detection module 1401 and the two image acquisition units 121, which can increase the capturing field of view of the first position detection module 1401 and the two image acquisition units 121, which is conducive to improving the accuracy of detection; the support frame 112 and the mounting plate 113 have simple structures and are easy to process and manufacture.

In some embodiments, the mounting surface 1131 is a plane.

By adopting the technical solution of the embodiment, the first position detection module 1401 and the two image acquisition units 121 are mounted on the same plane, which can effectively reduce the mounting error of the first position detection module 1401 and the two image acquisition units 121, the accuracy of the relative fixed position between the first position detection module 1401 and the two image acquisition units 121 is improved, which is conductive to improving the detection accuracy of the first detection device 101; in addition, the mounting operation structure of the first position detection module 1401 and the two image acquisition units 121 is simple, which is convenient for the assembly of the first detection device 101.

In some embodiments, as shown in FIG. 7 , the mounting base 110 is provided with a magnetic attraction surface 111a, which can be magnetically fixed to the bearing mechanism 3000 for supporting the vehicle 2000.

The magnetic attraction surface 111a can refer to the surface of the mounting base 110 for magnetically fixing to the bearing mechanism 3000.

In some examples, the mounting base 110 is provided with a magnetic attraction member 1111, which is exposed on the mounting base 110, and the magnetic attraction member 1111 is directly attracted on the bearing mechanism 3000, and the surface where the magnetic attraction member 1111 contacts the bearing mechanism 3000 is the magnetic attraction surface 111a.

In some examples, the mounting base 110 is provided with a magnetic attraction member 1111, which is mounted inside the mounting base 110, and the magnetic attraction member 1111 can be magnetically attracted to the bearing mechanism 3000 through the mounting base 110, and the surface where the mounting base 110 contacts the bearing mechanism 3000 is the magnetic attraction surface 111a.

In some examples, the magnetic attraction member 1111 can be, but is not limited to, a magnet or an iron member; when the magnetic attraction member 1111 is a magnet, the bearing mechanism 3000 can be provided with a magnet or an iron member that is magnetically attracted to the magnet; when the magnetic attraction member 1111 is an iron member, the bearing mechanism 3000 is provided with a magnet that is magnetically attracted to the iron member.

In some examples, the number of magnetic attraction members can be one or more, for example: two, three, four, etc.; for example, the number of magnetic attraction members 1111 is three, and the three magnetic attraction members 1111 are arranged at intervals along the length direction of the vehicle 2000, and the three magnetic attraction members 1111 are magnetically attracted to the surface of the bearing mechanism 3000 to form a magnetic attraction surface 111a together, so that multi-point magnetic attraction can be formed between the mounting base 110 and the bearing mechanism 3000, which can improve the connection reliability between the mounting base 110 and the bearing mechanism 3000.

By adopting the technical solution of the embodiment, the mounting base 110 can be magnetically fixed on the bearing mechanism 3000 through the magnetic attraction surface 111a, the mounting base 110 has good fixing stability, the image acquisition unit 121 and the image acquisition member 142 have good capturing stability, and the clarity of the acquired image information is better, which is conducive to improving the detection accuracy of the four-wheel aligner 1000; in addition, the magnetic connection method is adopted to facilitate the mounting and position adjustment of the first detection device 101.

In some embodiments, the first detection device 101 includes a battery for powering the first position detection module 1401 and the first image acquisition module 1201. The battery is arranged in the base 111. The battery can power the position detection module and the image acquisition module without an external power supply, and the detection operation of the first detection device 101 is more convenient. The battery can power the electronic devices in the first position detection module 1401, such as: a main board, a camera, a light plate, etc.

In some embodiments, as shown in FIG. 10, the height difference between the lens 12111 of the image acquisition unit 121 and the magnetic attraction surface 111a ranges from 100 mm to 160 mm.

The height difference between the lens 12111 of the image acquisition unit 121 and the magnetic attraction surface 111a can refer to the height difference between the center of the mirror surface of the lens 12111 of the image acquisition unit 121 and the center of the magnetic attraction surface 111a.

The height difference between the lens 12111 of the image acquisition unit 121 and the magnetic attraction surface 111a is H, where 100mm≤H≤160mm. The value of H can be 100mm, 160mm, or any value between 100mm and 160mm; for example, the value of H can be, but is not limited to, 100mm, 110mm, 120mm, 130mm, 140mm, 150mm, 160mm.

For the design of H≥100mm, when the magnetic attraction surface 111a is magnetically attracted to the side of the bearing mechanism 3000, the image acquisition unit 121 can be located above the supporting platform of the bearing mechanism 3000, which can reduce the obstruction of the capturing field of the image acquisition unit 121 by the bearing mechanism 3000, which is beneficial for the image acquisition unit 121 to obtain clear image information and improve the detection accuracy of the first detection device 101. For the design of H≤160mm, the lens 12111 of the image acquisition unit 121 is not arranged too high to cause the target calibration member to be located outside the capturing field of the image acquisition unit 121.

By adopting the technical solution of the embodiment, it is conducive to the image acquisition unit 121 to obtain clear image information and improve the detection accuracy of the four-wheel aligner 1000.

In some embodiments, along the width direction of the vehicle 2000, the distance between the lens 12111 of the image acquisition unit 121 and the magnetic attraction surface 111a ranges from 160mm to 220mm.

The distance between the lens 12111 of the image acquisition unit 121 and the magnetic attraction surface 111a along the width direction of the vehicle 2000 can refer to the distance between the center of the mirror surface of the lens 12111 and the magnetic attraction surface 111a in the width direction of the vehicle 2000.

Along the width direction of the vehicle 2000, the distance between the lens 12111 of the image acquisition unit 121 and the magnetic attraction surface 111a is L, where 160mm≤L≤220mm. The value of L can be 160mm, 220mm, or any value between 160mm and 220mm; for example, the value of L can be, but is not limited to, 160mm, 170mm, 180mm, 190mm, 200mm, 210mm, 22mm.

For the design of L≥160mm, such that a spacing is existed between the lens 12111 of the image acquisition unit 121 and the vehicle 2000, the field of view of the image acquisition unit 121 capturing the target calibration member is increased, which is conducive to the image acquisition unit 121 to obtain clear image information, and can also meet the detection requirements of vehicles 2000 of different widths; the design of L≤220mm makes the lens 12111 of the image acquisition unit 121 not too far away from the vehicle 2000, and the image acquisition unit 121 can obtain clear image information.

By adopting the technical solution of the embodiment, it is conducive to the image acquisition unit 121 to obtain clear image information and improve the detection accuracy of the first detection device 101.

In some embodiments, as shown in FIG. 8, the height difference between the lens 12111 of the image acquisition unit 121 and the magnetic attraction surface 111a ranges from 100mm to 160mm, and along the width direction of the vehicle 2000, the distance between the lens 12111 of the image acquisition unit 121 and the magnetic attraction surface 111a ranges from 160mm to 220mm.

By adopting the technical solution of the embodiment, it is conducive to the image acquisition unit 121 to acquire clear image information and improve the detection accuracy of the first detection device 101.

In some embodiments, as shown in FIGS. 4 and 7, the base 111 is in a long strip shape, one end surface of the base 111 forms the magnetic attraction surface 111a, the support frame 112 is mounted at the other end of the base 111, and the image acquisition unit 121 and the first position detection module 1401 are mounted on the support frame 112; during detection, the magnetic attraction surface 111a of the base 111 is attracted on the side of the bearing mechanism 3000 and is perpendicular to the side, and the image acquisition unit 121 is mounted on the support frame 112 located at the other end of the base 111, so that there is a certain distance between the lens 12111 of the image acquisition unit 121 and the vehicle 2000 in the width direction of the vehicle 2000, so as to facilitate the image acquisition unit 121 to obtain clear image information.

In some embodiments, the end of the base 111 facing away from the magnetic attraction surface 111a is provided with an indication unit 1112, which is configured to display the working status of the first detection device 101 to facilitate the use of the first detection device 101. The indication unit 1112 can be, but is not limited to, an indicator light or a display panel.

In some embodiments, as shown in FIGS. 2 and 3, the shell 151 is provided with a second window 1515, and the second window 1515 allows the lens 12111 of the image acquisition unit 121 to be exposed, so as to facilitate the image acquisition unit 121 to obtain image information.

In some embodiments, the shell 151 is formed with a handle 1516 for a person to hold, so as to facilitate the use of the first detection device 101.

In some embodiments, the shell 151 can include a plurality of portions, which can be formed separately and then spliced together, or can be formed as one piece.

In some examples, the shell 151 includes a first shell 1511 and a second shell 1512, and the first shell 1511 and the second shell 1512 are spliced and enclosed to form an mounting space for mounting the first detection module and the two image acquisition units 121; a third shell 1513 is sleeved on the ends of the first shell 1511 and the second shell 1512 close to the first window 1514 to fix and protect the first shell 1511 and the second shell 1512. This design can facilitate the assembly of the first detection device 101.

The structure of the first detection device 101 is described above. The structure of the second detection device 102 can adopt the same structure as the first detection device 101, or a different structure.

In some embodiments, as shown in FIGS. 1 to 4, the control device 130 further includes a first control member 131 and a second control member 132. The first control member 131 is disposed in the first detection device 101, and the second control member 132 is disposed in the second detection device 102; the first control member 131 is connected to the first detection device 101 to receive the first image information, the second image information, and the sixth image information; the second control member 132 is connected to the second detection device 102 to receive the third image information, the fourth image information, and the seventh image information; the first control member 131 and the second control member 132 are connected in a wired manner or in a wireless manner; the first control member 131 transmits the first image information, the second image information, and the sixth image information to the second control member 132, and the second control member 132 receives the first image information, the second image information, and the sixth image information, and analyzes the four-wheel alignment information of the vehicle 2000 according to the first image information, the second image information, the third image information, the fourth image information, the sixth image information, and the seventh image information and displays the four-wheel alignment information of the vehicle 2000.

The control device 130 is divided into two portions, one of which is the first control member 131, and the other is the second control member 132. The first control member 131 is located in the first detection device 101, and the second control member 132 is located in the second detection device 102. For example, the first control member 131 can be a main board in the first detection device 101, and the second control member 132 can be a main board in the second detection device 102.

The first control member 131 is connected to the image acquisition member 142 of the first detection device 101 and the two image acquisition units 121 of the first detection device 101. The connection can be in a wired manner through a harness, or in a wireless manner through a Bluetooth communication connection, a WIFI communication connection, etc.; the first control member 131 is capable of receiving the first image information, the second image information, and the sixth image information.

In some examples, the first control member 131 is mounted on the mounting surface 1131 and is located between the two image acquisition units 121 of the first detection device 101, so as to facilitate the connection between the first control member 131 and the two image acquisition units 121 of the first detection device 101.

The second control member 132 is connected to the image acquisition member 142 of the second detection device 102 and the two image acquisition units 121 of the second detection device 102. The connection can be in a wired manner through a harness, or in a wireless manner through a Bluetooth communication connection, a WIFI communication connection, etc.; the second control member 132 is capable of receiving the third image information, the fourth image information, and the seventh image information.

In some examples, the second control member 132 is mounted on the mounting surface 1131 and is located between the two image acquisition units 121 of the second detection device 102 to facilitate the connection of the second control member 132 with the two image acquisition units 121 of the second detection device 102.

The first control member 131 is connected to the second control member 132. The connection can be in a wired manner through a harness, or in a wireless manner through a Bluetooth communication connection, a WIFI communication connection, etc., so as to realize data transmission between the first control member 131 and the second control member 132.

The first control member 131 does not have computing capability, while the second control member 132 has computing capability. The first control member 131 can transmit the first image information, the second image information and the sixth image information to the second control member 132. After receiving the first image information, the second image information, the third image information, the fourth image information, the sixth image information and the seventh image information, the second control member 132 analyzes and calculates the four-wheel alignment information of the vehicle 2000 according to the first image information, the second image information, the third image information, the fourth image information, the sixth image information and the seventh image information; the second control member 132 also has a display function, so as to display the four-wheel alignment information of the vehicle 2000. For example, the second control member 132 also includes a display unit, such as an electronic display screen.

By adopting the technical solution of the embodiment, the four-wheel alignment information of the vehicle 2000 can be directly displayed after the detection of the first detection device 101 and the second detection device 102 is completed, and the four-wheel aligner 1000 is simple and convenient to use.

In some embodiments, the second control member 132 transmits the third image information, the fourth image information and the seventh image information to the first control member 131, and the first control member 131 receives the first image information, the second image information and the sixth image information, and analyzes the four-wheel alignment information of the vehicle 2000 according to the first image information, the second image information, the third image information, the fourth image information, the sixth image information and the seventh image information and displays the four-wheel alignment information of the vehicle 2000.

The first control member 131 has computing capability, while the second control member 132 does not have computing capability. The second control member 132 can transmit the third image information, the fourth image information and the seventh image information to the first control member 131. After receiving the first image information, the second image information, the third image information, the fourth image information, the sixth image information and the seventh image information, the first control member 131 analyzes and calculates the four-wheel alignment information of the vehicle 2000 according to the first image information, the second image information, the third image information, the fourth image information, the sixth image information and the seventh image information; the first control member 131 also has a display function, so as to display the four-wheel alignment information of the vehicle 2000. For example, the first control member 131 also includes a display unit, such as an electronic display screen.

By adopting the technical solution of the embodiment, the first detection device 101 and the second detection device 102 can directly display the four-wheel alignment information of the vehicle 2000 after the detection is completed, and the four-wheel aligner 1000 is simple and convenient to use.

In some embodiments, the control device 130 further includes a third control member 133, a fourth control member 134 and a fifth control member 135. The third control member 133 is disposed in the first detection device 101, and the fourth control member 134 is disposed in the second detection device 102; the fifth control member 135 is a separated component; the third control member 133 is connected to the first detection device 101 to receive the first image information, the second image information and the sixth image information; the fourth control member 134 is connected to the second detection device 102 to receive the third image information, the fourth image information and the seventh image information; the third control member 133 can transmit the first image information, the second image information and the sixth image information directly to the fifth control member 135 or transmit the first image information, the second image information and the sixth image information to the fifth control member 135 through the fourth control member 134 in a wireless manner or in a wired manner; the fourth control member 134 can transmit the third image information, the fourth image information and the seventh image information directly to the fifth control member 135 or transmit the third image information, the fourth image information and the seventh image information to the fifth control member 135 through the third control member 133 in a wireless manner or in a wired manner; the fifth control member 135 can analyze the four-wheel alignment information of the vehicle 2000 according to the first image information, the second image information, the third image information, the fourth image information, the sixth image information and the seventh image information and display the four-wheel alignment information of the vehicle 2000.

The control device 130 is divided into three portions, a first portion is the third control member 133, a second portion is the fourth control member 134, and a third portion is the fifth control member 135. The third control member 133 is located in the first detection device 101, the fourth control member 134 is located in the second detection device 102, and the fifth control member 135 is a component independent of the first detection device 101 and the second detection device 102. The fifth control member 135 also has a display function, so that the four-wheel alignment information of the vehicle 2000 is displayed for the convenience of the detection personnel. For example, the third control member 133 can be the main board in the first detection device 101, the fourth control member 134 can be the main board in the second detection device 102, and the fifth control member 135 can be an electronic device such as a mobile phone, a tablet, a watch, and a computer.

The third control member 133 is connected to the image acquisition member 142 of the first detection device 101 and the two image acquisition units 121 of the first detection device 101. The connection can be in a wired manner through a harness, or in a wireless manner through a Bluetooth communication connection, a WIFI communication connection, etc.; the third control member 133 is capable of receiving the first image information, the second image information, and the sixth image information.

In some examples, the third control member 133 is mounted on the mounting surface 1131 and is located between the two image acquisition units 121 of the first detection device 101 to facilitate the connection of the third control member 133 with the two image acquisition units 121 of the first detection device 101.

The fourth control member 134 is connected to the image acquisition member 142 of the second detection device 102 and the two image acquisition units 121 of the second detection device 102. The connection can be in a wired manner through a harness, or in a wireless manner through a Bluetooth communication connection, a WIFI communication connection, etc.; the fourth control member 134 is capable of receiving the third image information, the fourth image information, and the seventh image information.

In some examples, the fourth control member 134 is mounted on the mounting surface 1131 and is located between the two image acquisition units 121 of the second detection device 102, so as to facilitate the connection between the fourth control member 134 and the two image acquisition units 121 of the second detection device 102.

In some examples, the third control member 133 is connected to the fourth control member 134, and the fourth control member 134 is connected to the fifth control member 135; the connection can be made by the harness in a wired manner, or connection in a wireless manner through a Bluetooth communication connection, a WIFI communication connection, etc., so as to realize data transmission between the third control member 133, the fourth control member 134 and the fifth control member 135.

The third control member 133 and the fourth control member 134 do not have computing capabilities, while the fifth control member 135 has computing capabilities. The third control member 133 can transmit the first image information, the second image information, and the sixth image information to the fourth control member 134. After receiving the first image information, the second image information, the third image information, the fourth image information, the sixth image information, and the seventh image information, the fourth control member 134 transmits the first image information, the second image information, the third image information, the fourth image information, the sixth image information, and the seventh image information to the fifth control member 135. The fifth control member 135 analyzes and calculates the four-wheel alignment information of the vehicle 2000 based on the first image information, the second image information, the third image information, the fourth image information, the sixth image information, and the seventh image information.

In some examples, the third control member 133 is connected to the fourth control member 134, and the third control member 133 is connected to the fifth control member 135; the connection can be in a wired manner through a harness, or in a wireless manner through a Bluetooth communication connection, a WIFI communication connection, etc., so as to realize data transmission among the third control member 133, the fourth control member 134 and the fifth control member 135.

The third control member 133 and the fourth control member 134 do not have computing capabilities, while the fifth control member 135 has computing capabilities. The fourth control member 134 can transmit the third image information, the fourth image information and the seventh image information to the third control member 133. After the third control member 133 receives the first image information, the second image information, the third image information, the fourth image information, the sixth image information and the seventh image information, the fourth control member 134 transmits the first image information, the second image information, the third image information, the fourth image information, the sixth image information and the seventh image information to the fifth control member 135. The fifth control member 135 analyzes and calculates the four-wheel alignment information of the vehicle 2000 according to the first image information, the second image information, the third image information, the fourth image information, the sixth image information and the seventh image information.

In some examples, the third control member 133 is connected to the fifth control member 135, and the fourth control member 134 is connected to the fifth control member 135; the connection can be in a wired manner through a harness, or in a wireless manner through a Bluetooth communication connection, a WIFI communication connection, etc., so as to realize data transmission among the third control member 133, the fourth control member 134 and the fifth control member 135.

The third control member 133 and the fourth control member 134 do not have computing capabilities, and the fifth control member 135 has computing capabilities. The third control member 133 can transmit the first image information, the second image information and the sixth image information to the fifth control member 135, and the fourth control member 134 can transmit the third image information, the fourth image information and the seventh image information to the fifth control member 135. The fifth control member 135 analyzes and calculates the four-wheel alignment information of the vehicle 2000 according to the first image information, the second image information, the third image information, the fourth image information, the sixth image information and the seventh image information.

In some examples, the third control member 133 is connected to the fourth control member 134, the third control member 133 is connected to the fifth control member 135, and the fourth control member 134 is connected to the fifth control member 135; the connection can be in a wired manner through a harness, or in a wireless manner through a Bluetooth communication connection, a WIFI communication connection, etc., so as to realize data transmission among the third control member 133, the fourth control member 134 and the fifth control member 135.

The third control member 133 and the fourth control member 134 do not have computing capabilities, while the fifth control member 135 has computing capabilities. The third control member 133 can transmit the first image information, the second image information, and the sixth image information to the fourth control member 134, and the fourth control member 134 transmits the first image information, the second image information, and the sixth image information to the fifth control member 135. The fourth control member 134 can transmit the third image information, the fourth image information, and the seventh image information to the third control member 133, and the third control member 133 transmits the third image information, the fourth image information, and the seventh image information to the fifth control member 135. The fifth control member 135 analyzes and calculates the four-wheel alignment information of the vehicle 2000 based on the first image information, the second image information, the third image information, the fourth image information, the sixth image information, and the seventh image information.

By adopting the technical solution of the embodiment, the image information is analyzed by using a separate fifth control member 135, while the third control member 133 in the first detection device 101 and the fourth control member 134 in the second detection device 102 do not have analyzing capabilities, which can reduce the production cost of the first detection device 101 and the second detection device 102; in addition, the fifth control member 135 is a separated component and can move with the detection personnel during detection, so that the four-wheel alignment information of the vehicle 2000 can be viewed at any time, and the use of the four-wheel aligner 1000 is also convenient.

In some embodiments, the third control member 133 can directly transmit the first image information, the second image information and the sixth image information to the fourth control member 134 in a wireless manner or in a wired manner, or transmit the first image information, the second image information and the sixth image information to the fourth control member 134 through the fifth control member 135; the fourth control member 134 can analyze the four-wheel alignment information of the vehicle 2000 according to the first image information, the second image information, the third image information, the fourth image information, the sixth image information and the seventh image information, and transmit the four-wheel alignment information of the vehicle 2000 to the fifth control member 135 for display.

In some examples, the third control member 133 is connected to the fifth control member 135, and the fifth control member 135 is connected to the fourth control member 134; the connection can be in a wired manner through a harness, or in a wireless manner through a Bluetooth communication connection, a WIFI communication connection, etc., so as to realize data transmission among the third control member 133, the fourth control member 134 and the fifth control member 135.

The third control member 133 and the fifth control member 135 do not have computing capabilities, while the fourth control member 134 has computing capabilities. The third control member 133 can transmit the first image information, the second image information, and the sixth image information to the fifth control member 135, and the fifth control member 135 transmits the first image information, the second image information, and the sixth image information to the fourth control member 134. After receiving the first image information, the second image information, the third image information, the fourth image information, the sixth image information, and the seventh image information, the fourth control member 134 analyzes and calculates the four-wheel alignment information of the vehicle 2000 based on the first image information, the second image information, the third image information, the fourth image information, the sixth image information, and the seventh image information, and the fourth control member 134 transmits the four-wheel alignment information of the vehicle 2000 to the fifth control member 135 for display.

In some examples, the third control member 133 is connected to the fourth control member 134, and the fourth control member 134 is connected to the fifth control member 135; the connection can be in a wired manner through a harness, or in a wireless manner through a Bluetooth communication connection, a WIFI communication connection, etc., so as to realize data transmission between the third control member 133, the fourth control member 134 and the fifth control member 135.

The third control member 133 and the fifth control member 135 do not have computing capabilities, and the fourth control member 134 has computing capabilities. The third control member 133 can transmit the first image information, the second image information and the sixth image information to the fourth control member 134. After the fourth control member 134 receives the first image information, the second image information, the third image information, the fourth image information, the sixth image information and the seventh image information, and the fourth control member 134 analyzes and calculates the four-wheel alignment information of the vehicle 2000 according to the first image information, the second image information, the third image information, the fourth image information, the sixth image information and the seventh image information; and the fourth control member 134 transmits the four-wheel alignment information of the vehicle 2000 to the fifth control member 135 for display.

By adopting the technical solution of the embodiment, the fourth control member 134 in the second detection device 102 is configured to calculate and analyze the image information to obtain the four-wheel alignment information of the vehicle 2000, while the separate fifth control member 135 has the ability to display the four-wheel alignment information of the vehicle 2000 but does not have the ability to calculate and analyze. The requirements for the fifth control member 135 are low, which can improve the versatility between the first detection device 101 and the second detection device 102 and the fifth control member 135, and facilitate the use of the four-wheel aligner 1000; in addition, the fifth control member 135 is a separated component and can move with the detection personnel during detection, so that it is convenient to check the four-wheel alignment information of the vehicle 2000 at any time, and it is also convenient to use the four-wheel aligner 1000.

In some embodiments, the fourth control member 134 can directly transmit the third image information, the fourth image information and the seventh image information to the third control member 133 in a wireless manner or in a wired manner or transmit the third image information, the fourth image information and the seventh image information to the third control member 133 through the fifth control member 135; the third control member 133 can analyze the four-wheel alignment information of the vehicle 2000 according to the first image information, the second image information, the third image information, the fourth image information, the sixth image information and the seventh image information, and transmit the four-wheel alignment information of the vehicle 2000 to the fifth control member 135 for display.

In some examples, the fourth control member 134 is connected to the fifth control member 135, and the third control member 133 is connected to the fourth control member 134; the connection can be in a wired manner through a harness, or in a wireless manner through a Bluetooth communication connection, a WIFI communication connection, etc., so as to realize data transmission between the third control member 133, the fourth control member 134 and the fifth control member 135.

The fourth control member 134 and the fifth control member 135 do not have computing capabilities, the third control member 133 has computing capabilities, the fourth control member 134 can transmit the third image information, the fourth image information and the seventh image information to the fifth control member 135, the fifth control member 135 transmits the third image information, the fourth image information and the seventh image information to the third control member 133, after the third control member 133 receives the first image information, the second image information, the third image information, the fourth image information, the sixth image information and the seventh image information, and analyzes and calculates the four-wheel alignment information of the vehicle 2000 according to the first image information, the second image information, the third image information, the fourth image information, the sixth image information and the seventh image information, and the third control member 133 transmits the four-wheel alignment information of the vehicle 2000 to the fifth control member 135 for display.

In some examples, the third control member 133 is connected to the fourth control member 134, and the third control member 133 is connected to the fifth control member 135; the connection can be in a wired manner through a harness, or in a wireless manner through a Bluetooth communication connection, a WIFI communication connection, etc., so as to realize data transmission among the third control member 133, the fourth control member 134 and the fifth control member 135.

The fourth control member 134 and the fifth control member 135 do not have computing capabilities, the third control member 133 has computing capabilities, the fourth control member 134 can transmit the third image information, the fourth image information and the seventh image information to the third control member 133, the third control member 133 receives the first image information, the second image information, the third image information, the fourth image information, the sixth image information and the seventh image information, and analyzes and calculates the four-wheel alignment information of the vehicle 2000 according to the first image information, the second image information, the third image information, the fourth image information, the sixth image information and the seventh image information, and the third control member 133 transmits the four-wheel alignment information of the vehicle 2000 to the fifth control member 135 for display.

By adopting the technical solution of the embodiment, the third control member 133 in the first detection device 101 is configured to calculate and analyze the image information to obtain the four-wheel alignment information of the vehicle 2000, while the separate fifth control member 135 has the ability to display the four-wheel alignment information of the vehicle 2000 but does not have the ability to calculate and analyze. The requirements for the fifth control member 135 are low, which can improve the versatility between the first detection device 101 and the second detection device 102 and the fifth control member 135, and facilitate the use of the four-wheel aligner 1000; in addition, the fifth control member 135 is a separated component and can be moved with the detection personnel during detection, so that the four-wheel alignment information of the vehicle 2000 can be checked at any time, which is also convenient for the use of the four-wheel aligner 1000.

The above description of each embodiment tends to emphasize the differences between the embodiments, and the same or similar parts can be referenced to each other. For the sake of brevity, the present application will not be repeated.

## Claims

1. A four-wheel aligner (1000), comprising:
a first detection device (101), configured to be arranged on a left side of a vehicle, wherein the first detection device (101) comprises a first position detection module (1401) and a first image acquisition module (1201), the first image acquisition module (1201) is configured to acquire first image information of a first calibration member (201) mounted on a left front wheel of the vehicle and second image information of a second calibration member (202) mounted on a left rear wheel of the vehicle;
a second detection device (102), configured to be arranged on a right side of the vehicle, wherein the second detection device (102) comprises a second position detection module (1402) and a second image acquisition module (1202), the second image acquisition module (1202) is configured to acquire third image information of a third calibration member (203) mounted on a right front wheel of the vehicle and fourth image information of a fourth calibration member (204) mounted on a right rear wheel of the vehicle; one of the first position detection module (1401) and the second position detection module (1402) comprises a fifth calibration member (141), and another one of the first position detection module (1401) and the second position detection module (1402) comprises an image acquisition member (142), and the image acquisition member (142) is configured to capture fifth image information of the fifth calibration member (141); and
a control device (130), connected to the first image acquisition module (1201), the second image acquisition module (1202), and the image acquisition member (142); and configured to receive the first image information, the second image information, the third image information, the fourth image information, and the fifth image information, and to analyze four-wheel alignment information of the vehicle according to the first image information, the second image information, the third image information, the fourth image information, and the fifth image information.

2. The four-wheel aligner (1000) according to claim 1, wherein both the first position detection module (1401) and the second position detection module (1402) comprise the image acquisition member (142) and the fifth calibration member (141);
the image acquisition member (142) of the first position detection module (1401) is configured to capture sixth image information of the fifth calibration member (141) of the second position detection module (1402);
the image acquisition member (142) of the second position detection module (1402) is configured to capture seventh image information of the fifth calibration member (141) of the first position detection module (1401);
the fifth image information comprises at least one of the sixth image information and the seventh image information; and
the image acquisition member (142) of the first position detection module (1401) and the image acquisition member (142) of the second position detection module (1402) are both connected to the control device (130), to enable the control device (130) receiving the sixth image information and the seventh image information, and analyze position information between the first detection device (101) and the second detection device (102) according to the sixth image information and the seventh image information.

3. The four-wheel aligner (1000) according to claim 1, wherein the fifth calibration member (141) is a self-luminous calibration member.

4. The four-wheel aligner (1000) according to claim 3, wherein the fifth calibration member (141) comprises a light plate (1411), a diffuser plate (1412), and a target plate (1413); the light plate (1411), the diffuser plate (1412), and the target plate (1413) are stacked, and the diffuser plate (1412) is located between the light plate (1411) and the target plate (1413).

5. The four-wheel aligner (1000) according to claim 4, wherein a surface of the target plate (1413) facing away from the light plate (1411) is provided with a plurality of calibration areas, and a spacing between at least two of the plurality of calibration areas and the light plate (1411) is different.

6. The four-wheel aligner (1000) according to claim 2, wherein in the first position detection module (1401) or the second position detection module (1402), a plurality of fifth calibration members (141) are provided, and at least two of the plurality of fifth calibration members (141) have different distances from the vehicle along a width direction of the vehicle; projections of the two fifth calibration members (141) with different distances from the vehicle along the width direction of the vehicle at least partially do not overlap.

7. The four-wheel aligner (1000) according to claim 6, wherein four fifth calibration members (141) are provided, a first of the four fifth calibration members (141) and a third of the four fifth calibration members (141) are arranged at intervals along a length direction of the vehicle; a second of the four fifth calibration members (141) is located at a lower side of the first of the four fifth calibration members (141) and at a side of the first of the four fifth calibration members (141) close to the vehicle, and a fourth of the four fifth calibration members (141) is located at an upper side of the first of the four fifth calibration members (141) and at a side of the first of the four fifth calibration members (141) away from the vehicle.

8. The four-wheel aligner (1000) according to claim 6, wherein the image acquisition member (142) is located in a middle of the plurality of fifth calibration members (141).

9. The four-wheel aligner (1000) according to any one of claims 1 to 8, wherein the first detection device (101) further comprises a mounting base (110), and the first image acquisition module (1201) comprises two image acquisition units (121) mounted on the mounting base (110), one of the two image acquisition units (121) is arranged on a side of the mounting base (110) facing the first calibration member (201) to acquire the first image information; another of the two image acquisition units (121) is located on a side of the mounting base (110) facing the second calibration member (202) to acquire the second image information.

10. The four-wheel aligner (1000) according to claim 9, wherein a lens of each of the two image acquisition units (121) is tilted upward toward the vehicle.

11. The four-wheel aligner (1000) according to claim 9, wherein the mounting base (110) is provided with a mounting surface (1131), and the first position detection module (1401) and the two image acquisition units (121) are mounted on the mounting surface (1131).

12. The four-wheel aligner (1000) according to claim 11, wherein the mounting base (110) comprises a base (111), a support frame (112) and a mounting plate (113), the support frame (112) is connected between the base (111) and the mounting plate (113) to enable the base (111) and the mounting plate (113) being spaced apart, and a surface of the mounting plate (113) facing away from the support frame (112) forms the mounting surface (1131).

13. The four-wheel aligner (1000) according to claim 12, wherein the mounting base (110) is provided with a magnetic attraction surface (111a), and the magnetic attraction surface (111a) enables to be magnetically fixed to a bearing mechanism (3000) for bearing the vehicle.

14. The four-wheel aligner (1000) according to any one of claims 2 to 8, wherein the control device (130) further comprises a first control member (131) and a second control member (132); the first control member (131) is arranged in the first detection device (101), and the second control member (132) is arranged in the second detection device (102);
the first control member (131) is connected to the first detection device (101) to receive the first image information, the second image information, and the sixth image information;
the second control member (132) is connected to the second detection device (102) to receive the third image information, the fourth image information, and the seventh image information;
the first control member (131) and the second control member (132) are connected in a wired manner or a wireless manner ;
the first control member (131) transmits the first image information, the second image information, and the sixth image information to the second control member (132), and the second control member (132) receives the first image information, the second image information, and the sixth image information, the four-wheel alignment information of the vehicle is analyzed according to the first image information, the second image information, the third image information, the fourth image information, the sixth image information, and the seventh image information, and to display the four-wheel alignment information of the vehicle; or
the second control member (132) transmits the third image information, the fourth image information, and the seventh image information to the first control member (131), the first control member (131) receives the first image information, the second image information and the sixth image information, the four-wheel alignment information of the vehicle is analyzed according to the first image information, the second image information, the third image information, the fourth image information, the sixth image information, and the seventh image information, and to display the four-wheel alignment information of the vehicle.

15. The four-wheel aligner (1000) according to any one of claims 2 to 8, wherein the control device (130) further comprises a third control member (133), a fourth control member (134), and a fifth control member (135); the third control member (133) is arranged in the first detection device (101), the fourth control member (134) is arranged in the second detection device (102); the fifth control member (135) is a separated component;
the third control member (133) is connected to the first detection device (101) to receive the first image information, the second image information, and the sixth image information;
the fourth control member (134) is connected to the second detection device (102) to receive the third image information, the fourth image information, and the seventh image information;
the third control member (133) is able to directly transmit the first image information, the second image information, and the sixth image information to the fifth control member (135) in a wireless manner or in a wired manner or transmit the first image information, the second image information, and the sixth image information to the fifth control member (135) to the fifth control member (135) through the fourth control member (134), the fourth control member (134) can directly transmit the third image information, the fourth image information, and the seventh image information to the fifth control member (135) in a wireless manner or in a wired manner or transmit the third image information, the fourth image information, and the seventh image information to the fifth control member (135) to the fifth control member (135) through the third control member (133); the fifth control member (135) is able to analyze the four-wheel alignment information of the vehicle according to the first image information, the second image information, the third image information, the fourth image information, the sixth image information, and the seventh image information, and to display the four-wheel alignment information of the vehicle; or
the third control member (133) is able to directly transmit the first image information, the second image information, and the sixth image information to the fourth control member (134) in a wireless manner or in a wired manner or transmit the first image information, the second image information, and the sixth image information to the fourth control member (134) through the fifth control member (135); the fourth control member (134) is able to analyze the four-wheel alignment information of the vehicle according to the first image information, the second image information, the third image information, the fourth image information, the sixth image information, and the seventh image information, and transmit the four-wheel alignment information of the vehicle to the fifth control member (135) for display; or
the fourth control member (134) is able to directly transmit the third image information, the fourth image information, and the seventh image information to the third control member (133) in a wireless manner or in a wired manner or transmit the third image information, the fourth image information, and the seventh image information to the third control member (133) through the fifth control member (135); the third control member (133) is able to analyze the four-wheel alignment information of the vehicle according to the first image information, the second image information, the third image information, the fourth image information, the sixth image information, and the seventh image information, and transmit the four-wheel alignment information of the vehicle to the fifth control member (135) for display.
